(19) Europäisches Patentamt / European Patent Office / Office européen des brevets

(11) **EP 2 017 654 A1**

(12) **EUROPEAN PATENT APPLICATION**
published in accordance with Art. 153(4) EPC

(43) Date of publication:
**21.01.2009 Bulletin 2009/04**

(51) Int Cl.:
***G02B 1/11*** *(2006.01)*

(21) Application number: **07741827.5**

(22) Date of filing: **18.04.2007**

(86) International application number:
**PCT/JP2007/058391**

(87) International publication number:
**WO 2007/123138 (01.11.2007 Gazette 2007/44)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **19.04.2006 JP 2006115308**

(71) Applicant: **TORAY INDUSTRIES, INC.**
**Tokyo 103-8666 (JP)**

(72) Inventors:
• **TSUCHIMOTO, Tatsuro**
**Otsu-shi, Shiga 520-8558 (JP)**
• **YOSHIDA, Minoru**
**Otsu-shi, Shiga 520-8558 (JP)**
• **KIRIMOTO, Takayoshi**
**Otsu-shi, Shiga 520-8558 (JP)**

(74) Representative: **Webster, Jeremy Mark et al**
**Mewburn Ellis LLP**
**33 Gutter Lane**
**London**
**EC2V 8AS (GB)**

(54) **FILTER USED FOR DISPLAY**

(57)     A display filter where the index of reflection outline clarity (Cr), the index of reflection luminance (Lr) and the index of image clarity (Ct) as defined in the description satisfy 5 < Cr < 100, Lr < 150 and 50 < Ct < 100. According to the present invention, a display filter having both excellent image clarity and excellent reflection prevention property can be provided.

**Fig. 1**

**Description**

TECHNICAL FIELD

The present invention relates to a display filter, and in particular, a plasma display filter.

BACKGROUND ART

An optical filter is attached to the front of a plasma display panel (hereinafter referred to as "PDP") in order to improve the functions of the PDP. As examples of functions required for PDP filters, (1) providing of mechanical strength to a PDP main body (panel) made of thin films of glass, (2) blocking of electromagnetic waves emitted from the PDP, (3) blocking of infrared rays emitted from the PDP, (4) anti-reflection of external light, and (5) correction of color tones, can be cited. PDP filters mounted in PDP currently available on the market are formed by layering two or more layers each having the functions (1) to (5). Specifically, a transparent substrate such as glass is used to provide mechanical strength to the PDP panel, a conductive film is used to block electromagnetic waves, an infrared ray absorbing film is used to block infrared rays, an anti-reflection film is used for anti-reflection of external light, and a layer containing pigments which absorb visible light is used to correct the color tone.

The requirements for the performance of PDP are becoming stricter year by year, and thus, greater requirements are placed on PDP filters. In particular, increase in the contrast, prevention of interference fringe and reduction of reflection on the PDP surface by fluorescent lights or the like have been strongly required. The problem with reflection can be theoretically solved by making the difference of refractive index between the layers which form the filter as close to zero as possible. In addition, this problem can be considered to be solved by making the outline of reflected images unclear by providing a light scattering layer on the surface of the filter. Possible methods of improving the filter through such ways as making the surface smooth or applying a light scattering layer have been examined, in order to prevent interference fringe.

For example, a technology for providing an anti-reflection layer on both sides of the front optical filter in order to reduce reflection has been disclosed (Patent Document 1).

In addition, in order to reduce reflection and at the same time prevent interference fringe, a technology for making the outline of reflected images unclear by providing a light scattering layer where the surface of the filter has uneven structure has been proposed (Patent Documents 2 and 3). Furthermore, a technology for reducing reflection by preventing light from reflecting from the surface of the panel and the rear surface of the filter by pasting a filter directly on the PDP panel has been disclosed (Patent Documents 4 and 5).

Patent Document 1: Japanese Unexamined Patent Publication No. 2000-156182
Patent Document 2: Japanese Unexamined Patent Publication No. 2001-281411
Patent Document 3: Japanese Unexamined Patent Publication No. 2004-126495
Patent Document 4: Japanese Unexamined Patent Publication No. 2005-242227
Patent Document 5: Japanese Unexamined Patent Publication No. 2005-243509

DISCLOSURE OF THE INVENTION

Problem to Be Solved by the Invention

In the technology in Patent Document 1, however, the anti-reflection properties are insufficient, and thus, sufficient effects of reducing reflection cannot be expected.

In addition, in the technology in Patent Documents 2 and 3, the optimization of light scattering property on the surface of the filter is insufficient, and therefore, the scattering property of transmitting light is high, thereby making the clarity of images reflected on the PDP surface poor, even when the property of reducing reflection is good (image clarity is poor). Meanwhile, there are cases where reduction of reflection is not necessarily good, even when the image clarity is good.

Furthermore, the technology in Patent Documents 4 and 5 does not have sufficient effects of reducing reflection.

An object of the present invention is to provide a display filter having both excellent image clarity and highly excellent effects of reducing reflection (hereinafter referred to as reflection prevention).

Means for Solving Problem

In order to solve the above problems, the display filter according to the present invention has the following configuration. That is, the display filter according to the present invention is a display filter, wherein index of reflection outline clarity (Cr), index of reflection luminance (Lr) and index of image clarity (Ct) as described below satisfy the following conditions:

- 5 < Cr < 100
- Lr < 150
- 50 < Ct < 100

It is herein preferable that the filter be a multilayer body having two or more layers and at least one of which be a light diffusion layer.

It is herein preferable that the filter be a multilayer body having two or more layers and at least one of interfaces between the layers be a light diffusion interface. Herein, it is preferable that the difference of refractive index between the layers on both side of the light diffusion interface be 0.05 to 0.3.

It is herein preferable that two or more layers which form the filter include a hard coat layer and a transparent resin layer as two adjacent layers, and the interface between the hard coat layer and the transparent resin layer be a light diffusion interface. Herein, it is preferable for the light diffusion interface to have a ripple structure.

Another aspect of the display filter according to the present invention provides a display filter made up of a multilayer body having two or more layers including a hard coat layer and a transparent resin layer as two adjacent layers, wherein the difference of refractive index between the hard coat layer and the transparent resin layer is 0.05 to 0.3, and the interface between the two layers has a ripple structure where the width of ripples is 1 $\mu$m to 100 $\mu$m, the length of ripples is 1 $\mu$m to 500 $\mu$m, the height of ripples is 0.05 $\mu$m to 3.0 $\mu$m, and the density of ripples is 50 % to 100 %.

The plasma display according to the present invention uses any of the display filters.

Effects of the Invention

The present invention can provide a display filter having both excellent image clarity and excellent reflection prevention property. Furthermore, a display filter which also has interference fringe prevention property can be provided by making the interface between a hard coat layer and a transparent resin layer a light diffusion interface.

BRIEF DESCRIPTION OF THE DRAWINGS

Fig. 1 is a schematic diagram (front diagram) of an apparatus for measuring an index of reflection outline clarity (Cr) and an index of reflection luminance (Lr).

Fig. 2 is a diagram (side diagram) showing a positional relationship between respective equipments in the apparatus for measuring the index of reflection outline clarity (Cr) and the index of reflection luminance (Lr).

Fig. 3 is a graph showing the distribution curve for the reflection luminance.

Fig. 4 is a schematic diagram (front diagram) of an apparatus for measuring an index of image clarity (Ct).

Fig. 5 is a diagram (side diagram) showing a positional relationship between respective equipments in the apparatus for measuring the index of image clarity (Ct).

Fig. 6 is a graph showing the distribution curve for the image luminance.

Fig. 7 is a diagram showing height of ripples.

Explanation of Symbols

1 PDP filter
2 Camera
3 Acryl plate
4 Fluorescent light
5 Image of fluorescent light reflected on acryl plate
6 Image of acryl plate reflected on PDP filter (reflected image)
7 Monitor
8 Image of acryl plate as taken by camera
9 Center line in width direction of image of fluorescent light (portion where image is analyzed)
10 PDP panel
11 Black pattern image (transmission pattern image)

12 Transmission pattern image as taken by camera
13 Line connecting center points of long sides of transmission pattern image (portion where image is analyzed)
A Maximum inclination of change in luminance in outline portion
B Maximum luminance
C Value of luminance of edge portion of transmission pattern image
D Maximum luminance
E Minimum luminance
F Difference between maximum luminance and minimum luminance
G Maximum inclination of change in luminance of outline portion
H Minimum point
I Maximum point
J Height of ripples

BEST MODE FOR CARRYING OUT THE INVENTION

(Concerning Anti-Reflection Performance)

As described above, the requirements for the performance of PDP in terms of the performance are becoming stricter year by year, and greater requirements are placed on PDP filters. In particular, improvements in PDP such as reduction of reflection on the PDP surface have been strongly required in order to further increase the quality of the screen. Reduction of reflection is theoretically considered to be achievable by making the difference of refractive index between the respective layers which form the filter as close to zero as possible, and providing a light scattering layer in the filter to make the outline of reflected images unclear, and various possible ways to do this have already been examined. However, there is a limit to how much the difference of refractive index can be lowered. In addition, in a case where a light scattering layer is used, the reflection can be reduced, but the clarity of the image reflected on the PDP screen tends to be poor, and therefore, it is not easy for all properties to be well-balanced. In a case where the total image quality is attempted to be increased, reduction of reflection on the PDP surface (hereinafter referred to as reflection property) and optical design of the filter on the basis of quantitative analysis of the clarity (hereinafter referred to as image clarity) of the image reflected on the PDP screen are considered necessary. However, the reflection property was simply evaluated by the eye or through the gloss according to the prior art, and no quantitative analysis has been carried out.

In view of this situation, in the present invention, a method for quantitatively evaluating the reflection property and image property has been found, and thus, a display filter where reduction of reflection and improvement of image clarity are both possible has been successfully developed.

Specifically, in the PDP filter according to the present invention, the index of reflection outline clarity (Cr), the index of reflection luminance (Lr) and the index of image clarity (Ct), which are parameters for the reflection property, satisfy the following conditions.

$5 < Cr < 100$

$Lr < 150$

$50 < Ct < 100$

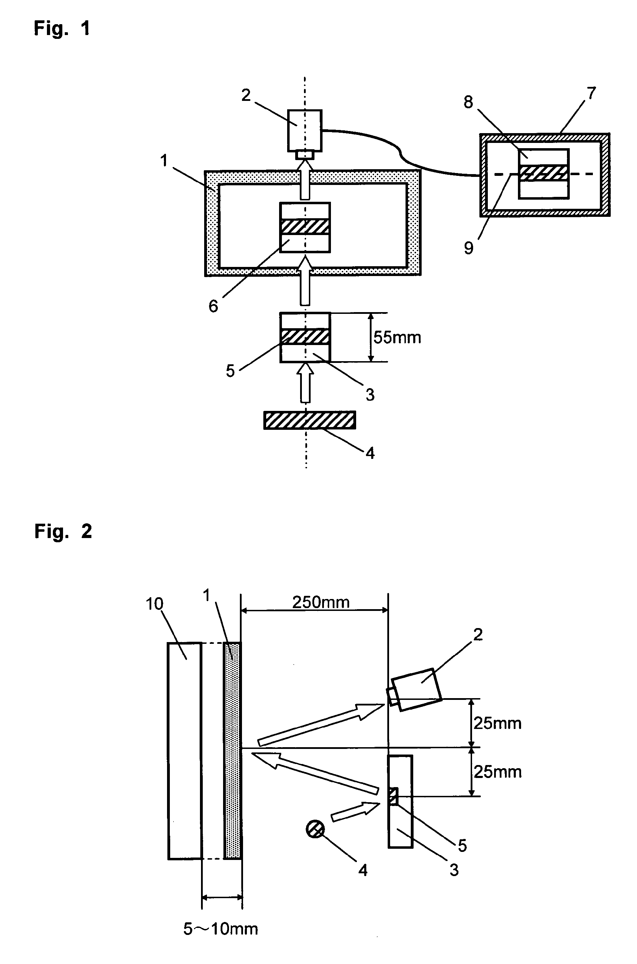

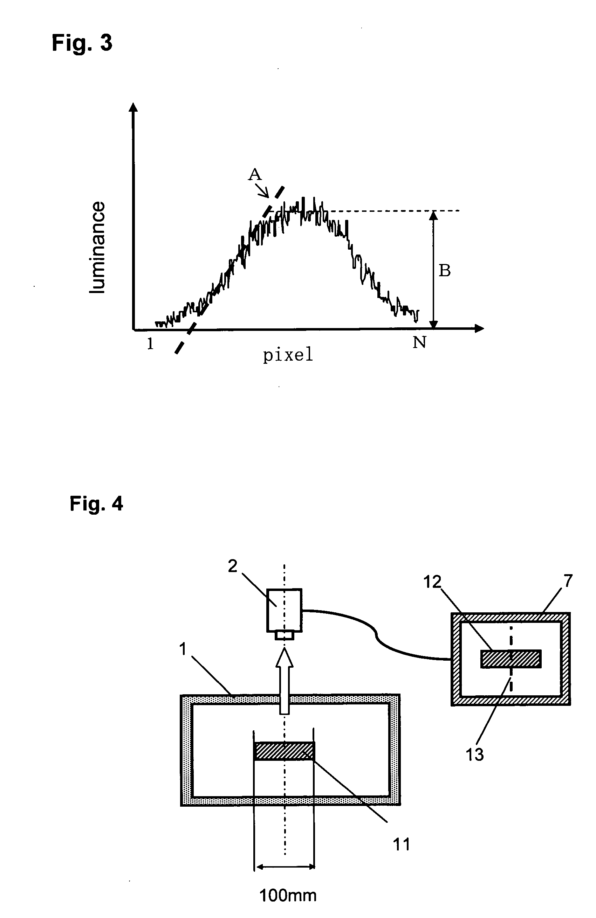

The clearer the outline is, the clearer the reflected image appears. In addition, the higher the luminance is, the clearer the reflected image appears. Therefore, it is necessary to make both the clarity of the outline of the reflected image and the luminance of the reflected image smaller in order to reduce the reflection. As for the evaluation of the reflection property in the present invention, the distribution in the luminance of a rectangular reflected image is measured using the apparatus shown in Figs. 1 and 2, and the luminance curve is drawn as shown in Fig. 3, so that the clarity of the outline of the reflected image can be evaluated from the inclination of the change in the luminance in the outline portion, and the luminance of the reflected image is evaluated from the maximum luminance. In the present invention, the inclination of the change in the luminance in the outline portion is the index of reflection outline clarity (Cr) and the maximum luminance is the index of reflection luminance (Lr). A more detailed definition for Cr and Lr is given below under Method for Measurement.

The index of reflection outline clarity satisfies $5 < Cr < 100$, preferably $15 < Cr < 80$, and more preferably $20 < Cr < 50$. The index of reflection luminance satisfies $Lr < 150$, preferably $Lr < 120$, and more preferably $Lr < 80$.

If Cr is 100 or more, the outline of the reflected image becomes clearer, and it becomes easy to see the reflected image, which is not preferable. If Cr is 5 or less, the quality of the image tends to lower, which is not preferable. If Lr is 150 or more, the luminance of the reflected image is too high, and the reflected image becomes easy to see, which is not preferable. The less Lr is, the more preferable, but theoretically the lower limit is 0.

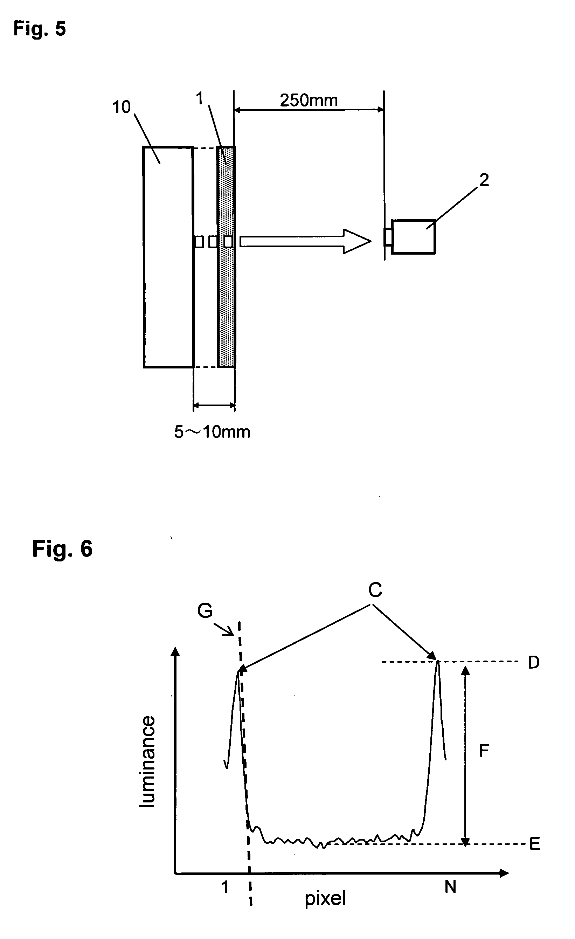

Meanwhile, the clearer the outline is, the clearer the image appears, and therefore, it is necessary to increase the clarity of the outline in order to obtain an image having high clarity without losing the outline of the original image reflected on the PDP panel. As for the evaluation of the image clarity according to the present invention, the distribution in the luminance in a black area pattern is measured using the apparatus shown in Figs. 4 and 5, the luminance curve shown in Fig. 6 is drawn, and thus the clarity of the outline of the image is evaluated from the inclination of the change in the luminance in the outline portion. In the present invention, the inclination of the change in the luminance in the outline portion is the index of image clarity (Ct). A more detailed definition for CT is given under Method for Measurement.

The index of image clarity (Ct) satisfies $50 < Ct < 100$, preferably $60 < Ct < 100$, and more preferably $70 < Ct < 100$.

The maximum value for the index of image clarity is 100 or less by definition. If the index of image clarity is 50 or less, the quality of the image deteriorates and the image on the PDP panel tends to be blurry, which is not preferable.

In addition, the reflection image consists of light reflected from the display filter and light reflected from the panel. The light reflected from the panel is absorbed by the display filter, and therefore, it is possible to lower the luminance of the reflection image, that is, the index of image clarity by lowering the transmittance of the display filter, and as a result, the performance of reflection can be improved. However, in a case where the transmittance is too low, the luminance of the image is also low, making the image dark. In this case, it is necessary to make the image on the PDP panel bright in order to maintain the luminance, and as a result, the power consumption increases, which is not preferable. The total light transmittance of the display filter according to the present invention is preferably 20 % to 60 %, more preferably 25 % to 50 %, and most preferably 30 % to 45 %. By providing such transmittance, the reduction of reflection and the luminance of images can be appropriately balanced.

(Concerning Configuration of Filter)

A preferable aspect for the display filter according to the present invention is a multilayer body where two or more layers are layered. These layers are functional layers each having a particular function. As an example of these functional layers, an anti-reflection layer, a hard coat layer, a transparent resin layer, an ultraviolet ray shielding layer, an infrared ray shielding layer, an electromagnetic wave shielding layer, a color correcting layer, a transparent substrate layer, and an interlayer adhesive layer can be cited. Though the order to the functional layers is not particularly limited, the anti-reflection layer should be the top layer (on the viewer side), and in a preferable aspect, the hard coat layer is located beneath the anti-reflection layer, the color correcting layer is located beneath this, and the electromagnetic wave shielding layer is located beneath this. In a case where an infrared ray absorbing agent is used in the infrared ray shielding layer, it is preferable to provide an ultraviolet ray shielding layer above this layer. Examples of a preferable layering order are: anti-reflection layer/hard coat layer/transparent resin layer/ultraviolet ray shielding layer/color correcting layer/infrared ray shielding layer/electromagnetic wave shielding layer/transparent substrate layer, anti-reflection layer/hard coat layer/transparent resin layer/ultraviolet ray shielding layer/color correcting layer/ultraviolet ray shielding layer/transparent substrate layer/electromagnetic wave shielding layer, anti-reflection layer/hard coat layer/transparent resin layer/ultraviolet ray shielding layer/color correcting layer/transparent substrate layer/infrared ray shielding layer/electromagnetic wave shielding layer, and anti-reflection layer/hard coat layer/transparent resin layer/ultraviolet ray shielding layer/color correcting layer/transparent substrate layer/electromagnetic wave shielding layer/infrared ray shielding layer.

The display filter according to the present invention can be attached to the display surface on the PDP panel for use. In a case of being attached to the display surface, the display filter may be pasted directly on the display screen on the PDP panel, or the display filter may be provided with a space between the display filter and the display screen.

(Light Diffusion Layer, Light Diffusion Interface and Interface Ripple Structure)

A preferable aspect of the display filter is a multilayer body of two or more layers, and at least one of these layers is a light diffusion layer in the configuration. Another preferable aspect is a multilayer body of two or more layers, and at least one interface of the interfaces between the layers is a light diffusion interface in the configuration. These aspects are preferable in order to provide a display filter having excellent reflection property and image clarity.

An example of the light diffusion layer is a light diffusion layer in which a component having a different index of refraction from a binder component is dispersed. A layer functioning only to diffuse light may be provided, and a component having a different index of refraction may be dispersed in any of the above respective functional layers, so that the layer can be provided with a light diffusion function in addition to the original function. The layer in which a component having a different index of refraction is dispersed is any layer selected from an anti-reflection layer, a hard coat layer, a transparent resin layer, an ultraviolet ray shielding layer, an infrared ray shielding layer, an electromagnetic wave shielding layer, a color correcting layer, and a transparent substrate layer, an interlayer adhesive layer, or the like. It is preferable to disperse a component having a different index of refraction in a transparent resin layer or an interlayer adhesive layer in order to prevent the original function of the layer from being lost and prevent the productivity from lowering. Various types of organic and inorganic components can be used for the component having a different index of refraction, as long as they do not affect the optical property. Specifically, inorganic particles such as silica, colloidal silica, alumina, alumina sol, kaolin, talc, mica, calcium carbonate, barium sulfate, carbon black, zeolite, titanium oxide and metal fine powder, and organic particles such as an acryl resin, a polyester resin, a urethane resin, a polyolefin resin, a polycarbonate resin, an alkyd resin, an epoxy resin, a urea resin, a phenol resin, a silicone resin and a rubber based resin can be cited.

A layer where the below described ripple structure is formed on the surface may be used as the light diffusion layer.

It is preferable for the total light transmittance of the light diffusion layer to be 85 % or more and for the haze to be 20 % or less, and it is more preferable for the total light transmittance to be 90 % or more and for the haze to be 10 % or less. The visibility and clarity of the image can be prevented from deteriorating by applying such a layer.

Meanwhile, as an aspect where the interface between two or more layers is a light diffusion interface, a filter where a ripple structure is provided in the interface between adjacent layers can be cited. Specifically, a ripple structure (microscopically uneven structure) is formed in the interface between two or more layers. In the ripple structure, the width of the ripples is preferably 1 $\mu$m to 100 $\mu$m, more preferably 1 $\mu$m to 60 $\mu$m, and most preferably 10 $\mu$m to 30 $\mu$m. The length of the ripples is preferably 1 $\mu$m to 500 $\mu$m, more preferably 10 $\mu$m to 100 $\mu$m, still more preferably 10 $\mu$m to 60 $\mu$m, and particularly preferably 10 $\mu$m to 30 $\mu$m. The height of the ripples is preferably 0.05 $\mu$m to 3 $\mu$m, more preferably 0.05 $\mu$m to 1.5 $\mu$m, still more preferably 0.1 $\mu$m to 1 $\mu$m, and particularly preferably 0.1 $\mu$m to 0.5 $\mu$m. The density of the ripples is preferably 50 % to 100 %, more preferably 70 % to 90 %, and still more preferably 75 % to 85 %. Excellent reflection property and excellent image clarity can both be achieved by forming a ripple structure which satisfies these specific conditions. In the form of the ripple structure, the length of the short side in a photograph of the interface structure as taken by an optical microscope is defined as "width of ripples" and the length of the long side is defined as "length of ripples." In a case where the ripple structure is close to a circle, the diameter is the length of the ripples and the width of the ripples. The method for measurement is described in further detail below.

If the width or length of the ripples is less than 1 $\mu$m, if the height of the ripples is less than 0.05 $\mu$m, or if the density of the ripples is less than 50 %, the effects of preventing reflection are poor and the index of reflection outline clarity (Cr) tends to be Cr > 100, which is not preferable. Meanwhile, if the width of the ripples exceeds 100 $\mu$m, or if the length of the ripples exceeds 500 $\mu$m, there is glare on the screen due to lens effects in the ripple structure, which is not preferable. In addition, if the height of the ripples is 3 $\mu$m or more, the image clarity deteriorates, and the index of image clarity (Ct) tends to be 50 or less, which is not preferable.

The ripple structure can be provided in the interface on the inside instead of the top surface layer of the filter (on the viewer side), and thus, reduction of reflection can be realized while maintaining slight gloss on the surface, so that an aesthetically pleasing PDP can be provided.

It is preferable for the difference of refractive index between the layers on both side of the light diffusion interface to be 0.05 to 0.3. The difference of refractive index is more preferably 0.1 to 0.2. If the difference of refractive index exceeds 0.3, there is much light diffusion, and the image clarity tends to deteriorate. If the difference of refractive index is less than 0.05, there is little light diffusion, and the effects of reducing reflection tend to be poor. In addition, an aspect where the light diffusion interface has a ripple structure as described above is more preferable.

In a preferable configuration for the display filter according to the present invention, an anti-reflection layer/ hard coat layer/transparent resin layer are provided in this order starting from the top surface layer (on the viewer side). This is because this configuration can allow the reflectance to lower, so that reflection can be reduced, and the hardness on the surface can increase. The problem with this configuration is that there is an interference fringe (Newton ring) when the thickness of the hard coat layer is uneven. However, interference fringe can be prevented by making the interface between the hard coat layer and the transparent resin layer a light diffusion interface. Furthermore, an aspect where the light diffusion interface has a ripple structure as described above is more preferable. In a case where the light diffusion interface has a ripple structure, the higher the height and density of the ripples are, the more preferable in order to prevent interference fringe. If the ripple structure is not controlled to have an optimal value, the haze of the filter increases, and the quality of the image, such as the clarity of the image, is sometimes negatively affected, but the width of the ripples, the length of the ripples, the height of the ripples and the density of the ripples can be controlled within the above range, so that excellent reflection property, excellent image clarity and prevention of interference fringe can be achieved at the same time.

(Method for Forming Ripple Structure)

There is a method for transferring the surface form of an emboss roll having an uneven structure as one method for controlling the form of the ripple structure (microscopically uneven structure). The width, the height and the density of the formed ripples can be controlled by changing the average surface coarseness on the emboss roll of which the uneven structure is transferred. In addition, the ripple structure can be controlled by means of the pressure for transfer and the temperature for pressing. In a case where an uneven structure is provided between a hard coat layer and a transparent resin layer, the uneven structure is transferred to a transparent resin layer such as a transparent thermoplastic film, and thereafter, a hard coat layer is layered on the surface where the uneven structure is formed, and thus the target structure can be achieved. An appropriate emboss roll for forming an uneven structure can be selected from those having fine unevenness to coarse unevenness in accordance with the application. The uneven structure of an emboss roll having a certain pattern, a mat surface, a lenticular lens form or a regular or random array of spherical protrusions and recesses can be used. An example of the uneven structure is protrusions or recesses made up of a portion of spheres having a diameter of 1 μm to 100 μm and a height of 0.01 μm to 0.5 μm, but the invention is not limited to this.

Though the transferring method using an emboss roll is effective for forming a ripple structure, it is preferable to use the below described in-line coating method in order to form an uneven structure with a relatively low height uniformly. The in-line coating method is a method in which a thermoplastic resin film is used as a transparent resin layer, the thermoplastic resin film is coated with a coating agent during the process for forming a film, and the thermoplastic resin film and the coat layer are layered. In the in-line coating method, a crystal polymer is used as the thermoplastic resin, and a controlled ripple structure can be formed between the thermoplastic resin film and the coat layer by selecting the conditions for film formation and the coating agent.

A case where a polyester film is used for the transparent resin layer is described as an example of the method for forming a ripple structure in the interface between the hard coat layer and the transparent resin layer in accordance with an in-line coating method. The above ripple structure cannot be achieved in accordance with a method for applying a hard coat layer on a polyester film that is conventionally, biaxially expanded, and curing the hard coat layer. As the method for forming the above ripple structure, a method for applying a hard coat application agent to a polyester film which is appropriately crystallized before the completion of the orientation of crystal (polyester film where crystallinity is 3 % to 25 % as measured in cross section in accordance with Raman method), thereafter, carrying out an expansion process and thermal treatment, and optionally irradiating the film with active rays such as ultraviolet rays is preferable. An appropriately crystallized polyester film can be obtained by heating the surface of a melt extruded unexpanded film and expanding the film to 2.5 to 3.5 times in the longitudinal direction. In addition, a method for adding a crystal seed agent to the film so that crystallization is accelerated or microscopic crystals are formed is also effective. After the application of a hard coat application agent, the polyester film on which an uncured hard coat agent is layered is expanded in the width direction. At this time, the hard coat application agent partially permeates into the polyester film when the composition of the hard coat application agent is adjusted so that a ripple structure is formed due to the difference of the expandability between the portion in which the hard coat agent permeates and the portion in which the hard coat agent does not permeate in the polyester film. The film that is expanded in the width direction is then led to the heat treatment process and heat treatment is carried out at approximately 220°C to 245°C, and thus, the hard coat application agent hardens, so that a hard coat layer is formed and the adhesion between the hard coat layer and the substrate film increases. It is preferable for a time for heat treatment to be long, but it may be desirable for the time to be approximately 10 seconds to 40 seconds, depending on the temperature. Since the film is formed rapidly, if the heat is insufficient, a method for irradiating the film with active rays such as ultraviolet rays after heat treatment to cure the film is effective.

As the method for forming a ripple structure, a method for forming an uneven structure on one surface by pressing a mold against the surface of a thermoplastic polyester film where crystal is oriented through uniaxial expansion, applying a hard coat application agent on the resulting film and carrying out heat treatment for approximately 10 seconds to 40 seconds at a high temperature of 220°C to 245°C is also effective, in addition to the above method.

Next, an example of a manufacturing method for a multilayer body of a hard coat layer and a transparent resin layer having a ripple structure in the interface in a case where polyethylene terephthalate (hereinafter referred to as PET) is used for the transparent resin layer will be described.

PET pellets (limiting viscosity: 0.62 dl/g) containing 0.2 weight % of silica particles having an average particle diameter of 0.3 μm are dried in a vacuum for approximately two hours at 180°C, and moisture is removed sufficiently. The dried PET pellets are supplied to an extruder, melted at a temperature of 260°C to 300°C, and discharged from a mouth piece in T shape in sheet form, and the discharged sheet is cooled and hardened on a cooling drum having a mirror surface, so that an unexpanded sheet is obtained. It is herein preferable to use a static electricity applying method in order to increase the adhesion between the cooling drum and the sheet. Thereafter, the resulting unexpanded sheet is expanded to 2.5 to 3.5 times in the longitudinal direction with a group of rolls heated to 70°C to 120°C. Next, a hard coat application agent is applied on the surface of the thus uniaxially expanded film, and thereafter, the film is carried to a tenter while both ends thereof being gripped with clips. The film is preheated to 70°C to 120°C within the tenter, and then expanded to approximately 2 to 5 times in the width direction at 80°C to 125°C. A relaxation process is carried out under an atmosphere of 220°C to 245°C so that the multilayer film which is expanded in the width direction shrinks by 3% to 10 %, while heat treatment for completing the orientation of crystal and hardening the applied film of the PET film is carried out.

The respective layers which form the display filter will be then described more concretely.

(Transparent Resin Layer)

The transparent resin layer is usually used as a substrate on which an anti-reflection layer, a hard coat layer, an infrared ray shielding layer, an electromagnetic wave shielding layer and the like are layered. The transparent resin layer may function as an ultraviolet ray shielding layer by adding an ultraviolet ray absorbing component.

It is preferable for the transparent resin layer to be a film obtained by film formation using melting state or film formation using solution state. As concrete examples, films made of polyester, polyolefin, polyamide, polyphenylene sulfide, cellulose ester, polycarbonate and polyacrylate can be cited. Among them, films having transparency, high mechanical strength and excellent stability in terms of the dimensions are preferable, in terms of the material for the transparent resin layer used as a layer on which a ripple structure is formed. As concrete examples, films made of polyester, cellulose ester and acryl (polyacrylate) can be cited, and among them, films made of polyester or triacetyl cellulose are preferable. Among polyacrylates, resins having an annular structure within the molecules are materials excellent in isotropy. Examples of resins having an annular structure in the molecules are acryl resins containing 10 weight % to 50 weight % of glutaric anhydride units. However, as a material having well-balanced performance in terms of all of the properties, polyester is particularly preferable.

As such polyester, polyethylene terephthalate, polyethylene-2,6-naphthalate, polypropylene terephthalate, polybutylene terephthalate and polypropylene naphthalate can be cited. Among them, polyethylene terephthalate and polyethylene-2, 6-naphthalate are preferable, and polyethylene terephthalate is most preferable from the viewpoints of performance and cost. In addition, two or more types of polyester may be mixed. In addition, a copolymer polyester may be used, and in this case, a film of which the crystal orientation is complete and the crystallinity thereof is 25 % or more, preferably 30 % or more, and more preferably 35 % or more, is used. If the crystallinity is less than 25 %, dimensional stability and mechanical strength tend to be insufficient. The crystallinity can be measured in accordance with Raman spectrometry.

In a case where the above polyester is used, it is preferable for the limiting viscosity (measured in o-chlorophenol at 25°C in accordance with JIS K7367) to be 0.4 dl/g to 1.2 dl/g, and it is more preferable for it to be 0.5 dl/g to 0.8 dl/g.

In a case where polyester is used for the transparent resin layer, it is preferable for the film to have crystal oriented through biaxial expansion in order to provide sufficient thermal stability for the film, particularly dimensional stability and mechanical strength. The term "having crystal oriented through biaxial expansion" means that the thermoplastic resin film is expanded to approximately 2.5 to 5 times in the longitudinal direction and width direction before expansion is completed, that is, before the orientation of crystal is completed, and thereafter, the orientation of the crystal is completed through the subsequent heat treatment, which indicates a pattern of biaxial orientation in wide angle X-ray diffraction.

The transparent resin layer may be a complex film having a multilayer structure of two or more layers. Examples of the complex film are a complex film which substantially does not contain any particles in the inner layers where a layer containing particles is provided as the surface layer, and a multilayer film having particles in the inner layers and containing particles in the surface layer. The inner layers and the surface layers of the above complex film may be different types of polymers or the same type of polymer chemically. In a case where particles are used, it is preferable for the amount to be so small as not to affect the transparency.

Though the thickness of the transparent resin layer can be appropriately selected in accordance with the application, it is preferably 10 $\mu$m to 500 $\mu$m, more preferably 20 $\mu$m to 300 $\mu$m, from the viewpoint of the mechanical strength and ease of handling.

The transparent resin layer may contain various types of additives, resin compositions, cross linking agents and the like, as long as they do not impair the effects of the present invention, particularly the optical property. Examples are oxidation preventing agents, thermally stabilizing agents, ultraviolet ray absorbing agents, organic and inorganic particles (for example silica, colloidal silica, alumina, alumina sol, kaolin, talc, mica, calcium carbonate, barium sulfate, carbon black, zeolite, titanium oxide and metal fine powders), pigments, dyes, anti-static agents, seed agent, acryl resins, polyester resins, urethane resins, polyolefin resins, polycarbonate resins, alkyd resins, epoxy resins, urea resins, phenol resins, silicone resins, rubber based resins, wax compositions, melamine based cross linking agents, oxazoline based cross linking agents, methyloled or alkyloled urea based cross linking agents, acrylamide, polyamide, epoxy resins, isocyanate compounds, aziridine compounds, various types of silane coupling agents, and various types of titanate based coupling agents.

It is preferable for the transparent resin layer to have a total light transmittance of 90 % or more and a haze of 1.5 % or less. The visibility and clarity of the image can be improved by applying such a transparent resin layer.

Furthermore, it is preferable for the transparent resin layer to have a transmission b value of 1.5 or less. In a case where the transmission b value exceeds 1.5, the transparent resin layer appears slightly yellowish, and thus, the clarity of the image is sometimes lost.

The b value is based on a method for expressing color defined in the international lighting commission (CIE), and the b value represents the chroma. When the b value is positive, a yellowish color tone is visible, and when the b value is negative, a bluish color tone is visible. It is also indicated that the greater the absolute value is, the greater the chroma of that color is and the more vivid the color, and the smaller the absolute value is, the lower the chroma is. The b value can be adjusted by mixing in a coloring agent. As the coloring agent, color inorganic pigments, organic pigments, dyes and the like can be used, and organic pigments such as cadmium red, red oxide, molybdenum red, chromium vermillion, chromium oxide, viridian, titanium cobalt green, cobalt green, cobalt chromium green, Victoria green, lapis, ultramarine blue, Prussian blue, Berlin blue, Milori blue, cobalt blue, cerulean blue, cobalt silica blue, cobalt zinc blue, manganese violet, mineral violet and cobalt violet are preferable for use, due to their excellent resistance to weather.

(Hard Coat Layer)

The hard coat layer is usually used by being layered on at least one side of the transparent resin layer. As the hard coat layer component, thermosetting or photo-curing resins such as acryl resins, silicone resins, melamine resins, urethane resins, alkyd resins and fluorine resins can be cited. Acryl resins are preferably used, taking the balance between the performance, the cost and the productivity into consideration.

The acryl resins are made of hardening compositions having multifunctional acrylate as a main component. The multifunctional acrylate is a monomer, an oligomer or a prepolymer having three or more (meth) acryloyloxy groups in one molecule. In the present description, "(meth)acry..." is an abbreviation for "acry... or methacry...." It is preferable for the multifunctional acrylate to have four or more (meth)acryloyloxy groups in one molecule, and it is more preferable for it to have five or more. As such multifunctional acrylate, compounds where hydroxide groups in multivalent alcohol having three or more alcohol hydroxide groups in one molecule are converted to esters of three or more (meth)acrylates can be cited.

Concrete examples are pentaerythritol tri(meth)acrylate, pentaerythritol tetra(meth)acrylate, dipentaerythritol tri(meth)acrylate, dipentaerythritol tetra(meth)acrylate, dipentaerythritol penta(meth)acrylate, dipentaerythritol hexa (meth)acrylate, trimethylol propane tri(meth)acrylate, trimethylol propane EO modified tri(meth)acrylate, pentaerythritol triacrylate hexamethylene diisocyanate urethane prepolymer, pentaerythritol triacrylate toluene diisocyanate urethane prepolymer, and pentaerythritol triacrylate isophorone diisocyanate urethane prepolymer. Two or more of these can be mixed for use.

The ratio of use of these multifunctional acrylates is preferably 50 weight % to 90 weight % relative to the total amount of the component in the hard coat layer, more preferably 50 weight % to 80 weight %.

It is preferable to use a monomer having one or two ethylenic unsaturated double bonds in one molecule together with the above compound in order to reduce the rigidity of the hard coat layer, or reduce the contraction at the time of hardening.

Examples of a compound having two ethylenic unsaturated double bonds in one molecule are:

(a) diester (meth)acrylate of alkylene glycol having a carbon number of 2 to 12: such as ethylene glycol di(meth) acrylate, propylene glycol di(meth)acrylate, 1, 4-butane diol di(meth)acrylate, neopentyl glycol di(meth)acrylate, and 1,6-hexane diol di(meth)acrylate;
(b) diester (meth)acrylate of polyoxyalkylene glycol: such as diethylene glycol di(meth)acrylate, triethylene glycol di (meth)acrylate, tetraethylene glycol di(meth)acrylate, dipropylene glycol di(meth)acrylate, polyethylene glycol di (meth)acrylate, and polypropylene glycol di(meth)acrylate;
(c) diester (meth)acrylate of multivalent alcohols: such as pentaerythritol di(meth)acrylate;
(d) diester (meth)acrylates of bisphenol A or hydrides of bisphenol A to which ethylene oxide and propylene oxide are added: such as 2,2'-bis(4-acryloxy ethoxyphenyl) propane, and 2,2'-bis(4-acryloxy propoxyphenyl) propane;
(e) urethane (meth)acrylate having two or more (meth) acryloyloxy groups in one molecule obtained by a reaction between a terminal isocyanate group containing compound obtained in advance by a reaction between a diisocyanate compound and a compound containing two or more alcohol hydroxide groups, and (meth)acrylate containing an alcohol hydroxide group; and
(f) epoxy (meth) acrylates having two or more (meth) acryloyloxy groups in one molecule obtained by a reaction between a compound having two or more epoxy groups in one molecule and acrylic acid or methacrylic acid.

Examples of the compound having one ethylenic unsaturated double bond in one molecule are methyl (meth) acrylate, ethyl (meth)acrylate, n- or i-propyl (meth)acrylate, n-, sec- or t-butyl (meth)acrylate, 2-ethylhexyl (meth)acrylate, lauryl (meth)acrylate, stearyl (meth)acrylate, methoxyethyl (meth)acrylate, ethoxyethyl (meth)acrylate, hydroxyethyl (meth)acrylate, polyethylene glycol mono(meth)acrylate, polypropylene glycol mono(meth)acrylate, glycidyl (meth)acrylate, tetrahydrofurfryl (meth)acrylate, N-hydroxyethyl (meth)acrylamide, N-vinyl pyrrolidone, N-vinyl-3-methyl pyrrolidone, and N-vinyl-5-methyl pyrrolidone. One or more of these monomers may be mixed for use.

It is preferable for the ratio of use of the monomer having one or two ethylenic unsaturated double bonds in one molecule to be 10 weight % to 40 weight % relative to the total amount of components in the hard coat layer, and it is more preferable for it to be 20 weight % to 40 weight %.

As commercially available multifunctional acryl based hardening compositions, products by Mitsubishi Rayon Co., Ltd. (trade name: Diabeam series (registered trademark)), Nagase & Co., Ltd. (trade name: Denacol series (registered trademark)), Shin-Nakamura Co., Ltd. (trade name: NK Ester series (registered trademark)), Dainippon Ink and Chemicals Incorporated (trade name: UNIDIC series (registered trademark)), Toagosei Chemical Industries Co., Ltd. (trade name: Aronix series (registered trademark)), Nippon Yushi K. K. (trade name: Blenmer series (registered trademark)), Nippon Kayaku Co., Ltd. (trade name: KAYARAD series (registered trademark), and Kyoeisha Chemicals Co., Ltd. (trade name: Light-Ester series (registered trademark), Light-Acrylate series (registered trademark)) can be used.

As a quality improving agent for the hard coat layer, application improving agents, defoaming agents, thickening agents, anti-static agents, inorganic particles, organic particles, organic lubricants, organic polymer compounds, ultraviolet ray absorbing agents, light stabilizers, dyes, pigments and stabilizers can be used. These may be added to the compositions which form the hard coat layer, as long as they do not hinder the thermosetting reaction or the photocuring reaction.

As the method for curing the above hard coat layer forming composition, a method for irradiating the composition with ultraviolet ray as an active ray, and a method for applying heat at a high temperature can be used, for example. When such methods are used, it is desirable to add a photopolymerization initiator or a thermal polymerization initiator to the above hard coat composition. As for the amount of use of the photopolymerization initiator or thermal polymerization initiator, 0.01 to 10 weight parts relative to 100 weight parts of the hard coat layer forming composition is suitable. When electron beams or gamma rays are used as a curing means, it is not necessary to add a polymerization initiator. When the composition is thermally cured at a high temperature of 200°C or higher, it is not necessary to add a thermal polymerization initiator.

Concrete examples of the photopolymerization initiator are carbonyl compounds such as acetophenone, 2,2-diethoxyacetophenone, p-dimethylacetophenone, p-dimethylaminopropiophenone, benzophenone, 2-chlorobenzophenone, 4,4'-dichlorobenzophenone, 4,4'-bis diethylaminobenzophenone, Michler's ketone, benzyl, benzoin, benzoin methyl ether, benzoin ethyl ether, benzoin isopropyl ether, methyl benzoyl formate, p-isopropyl-$\alpha$-hydroxyisobutylphenone, $\alpha$-hydroxyisobutylphenone, 2,2-dimethoxy-2-phenylacetophenone and 1-hydroxycyclohexyl phenyl ketone, and sulfur compounds such as tetramethylthiuram monosulfide, tetramethylthiuram disulfide, thioxanthone, 2-chlorothioxanthone and 2-methyl thioxanthone. These photopolymerization initiators may be used alone, or two or more may be combined for use. As the thermal polymerization initiator, a peroxide compound such as benzoyl peroxide and di-t-butyl peroxide can be used.

In a case of a photo curing reaction, as the active rays, electromagnetic waves for polymerizing acryl based vinyl groups, such as ultraviolet rays, electron beams and radiation ($\alpha$ rays, $\beta$ rays, $\gamma$ rays and the like) can be used. Ultraviolet rays are easy to handle, and preferable in terms of being practical. As the source for ultraviolet rays, ultraviolet ray fluorescent lamps, low pressure mercury lamps, high pressure mercury lamps, ultra-high pressure mercury lamps, xenon lamps and carbon arc lamps can be used. When the composition is irradiated with active rays, the composition can be cured efficiently when irradiated under a low concentration of oxygen. Furthermore, the electron beam system requires an expensive apparatus and operation in an inert gas, but is advantageous in that the application layers need not contain a photopolymerization initiator or photosensitizer.

In a case of a thermal curing reaction, a method for blowing air or an inert gas heated to at least 140°C with a steam heater, an electrical heater, an infrared ray heater or a far infrared ray heater against the hard coat layer forming composition application film through a slit nozzle can be cited as an example. In particular, it is preferable to use air heated to 200°C or higher, and it is more preferable to use nitrogen heated to 200°C or higher, from the viewpoint of the curing rate.

It is desirable to add a thermal polymerization preventing agent such as hydroquinone, hydroquinone monomethyl ether or 2, 5-t-butyl hydroquinone to the hard coat layer forming composition in order to prevent thermal polymerization at the time of manufacture and dark reaction during storage. As for the added amount of thermal polymerization preventing agent, 0.005 weight % to 0.05 weight % relative to the total weight of the hard coat layer forming composition is preferable.

In a case where a hard coat layer is formed on the transparent resin layer in accordance with an in-line coating method, a melamine based cross linking agent may be mixed in the hard coat layer forming composition. In a case where no melamine based cross linking agent is mixed in, the adhesion with the transparent resin layer becomes insufficient, and the effects of reducing interference fringe may be insufficient.

Though the type of melamine based cross linking agent used is not particularly limited, melamine, a methyloled melamine derivative obtained by condensing melamine and formaldehyde, a compound which is partially or completely converted to ether by a reaction between methyloled melamine and a low class alcohol, or a mixture of these, can be used. As the melamine based cross linking agent, condensation compounds made of a monomer or a polymer which is at least a dimer, or a mixture of these can be used. As the low class alcohol used for the conversion to ether, methyl alcohol, ethyl alcohol, isopropyl alcohol, n-propyl alcohol, n-butanol and isobutanol can be used. Among them, methyloled melamine and completely alkyled melamine are preferable from the viewpoint of the adhesiveness and prevention of interference fringe.

The amount of melamine based cross linking agent is 2 weight % to 40 weight % in the solid hard coat layer forming composition, preferably 5 weight % to 35 weight %, and more preferably 10 weight % to 30 weight %, from the viewpoint of the balance between the adhesiveness, the hardness and the prevention of interference fringe.

It is preferable to use an acid catalyst in order to accelerate the curing of melamine. As the acid catalyst, p-toluene sulfonate, dodecylbenzene sulfonate, dimethyl pyrophosphate, styrene sulfonate and derivatives thereof are suitable for use. The added amount of acid catalyst is preferably 0.05 weight % to 10 weight %, in terms of the solid ratio, relative to that of the melamine cross linking agent, more preferably 1 weight % to 5 weight %. In a case where a melamine based cross linking agent is added, it is particularly preferable to use a multifunctional acrylate having at least one hydroxide group in order to increase the adhesiveness.

As the means for applying a hard coat layer forming composition, various types of application methods, such as reverse coating methods, gravure coating methods, rod coating methods, bar coating methods, die coating methods and spray coating methods can be used.

It is preferable to use a leveling agent in the hard coat layer forming composition in order to make the surface of the hard coat layer smooth. As typical leveling agents, silicone based agents, acryl based agents and fluorine based agents can be cited, and it is effective to add a small amount of a silicone based agent in a case where only smoothness is required. As the silicone based leveling agent, substances having polydimethylsiloxane as a base skeleton to which a polyoxyalkylene group is added (for example SH190, produced by Toray Dow Koenig Silicone Co., Ltd.) are preferable.

In a case where a layered film is further provided on top of the hard coat layer, it is necessary not to inhibit the ease of application and the adhesiveness of the layered film, and in this case, it is preferable to use an acryl based leveling agent. As such leveling agent, it is preferable to use ARUFON-UP 1000 series, UH 2000 series or UC 3000 series (trademark), produced by Toagosei Chemical Industries Co., Ltd.. As for the added amount of leveling agent, a content of 0.01 weight % to 5 weight % in the hard coat layer forming composition is preferable.

According to the present invention, it is preferable for adhesive layer not to intervene between the transparent resin layer and the hard coat layer. When there is an adhesive layer, in some cases there causes interference fringe due to the difference of refractive index between the transparent resin layer and the hard coat layer, the adhesive layer deteriorates due to ultraviolet rays, or the durability of the adhesion at high temperatures and with high moisture deteriorates.

The thickness of the hard coat layer may be determined in accordance with the application, and 0.1 $\mu$m to 30 $\mu$m is usually preferable, 1 $\mu$m to 15 $\mu$m is more preferable, and 2 $\mu$m to 8 $\mu$m is most preferable. If the thickness of the hard coat layer is less than 0.1 $\mu$m, the layer is too thin when sufficiently cured, and therefore, the surface hardness is not sufficient, and the layer tends to be easily scratched. On the other hand, if the thickness of the hard coat layer exceeds 30 $\mu$m, the layer tends to curl at the time of curing and the cured film easily cracks due to the stress by bending and the like, which is not preferable.

(Transparent Substrate Layer)

The transparent substrate layer provides mechanical strength to the PDP main body, and an inorganic compound molded article or organic polymer molded article is used.

As the inorganic compound molded article, a glass plate is preferably used. It is usually preferable for the thickness to be within a range from 0.1 mm to 10 mm, and it is more preferable to be within a range from 1 mm to 4 mm.

The organic polymer molded article may be transparent in the wavelength region of visible light, and concrete examples of the material are polyethylene terephthalate (PET), polyether sulfone, polystyrene, polyethylene naphthalate, polyalylate, polyether ether ketone, polycarbonate, polypropylene, polyimide and triacetyl cellulose. These organic polymer molded articles may be in plate form (sheet form) or in film form, as long as the main surface is smooth. In a case where an organic polymer molded article in sheet form is used, the dimensional stability and the mechanical strength are excellent, and therefore, the molded article is suitable in a case where dimensional stability and mechanical strength are required. In a case where an organic polymer molded article in film form is used, the molded article is flexible and the respective functional layers can be formed in sequence in accordance with a roll-to-roll method, and therefore, a multilayer body which is long and has a large area can be efficiently produced. In this case, the thickness of the film is usually 10 $\mu$m to 250 $\mu$m. If the thickness of the film is less than 10 $\mu$m, the mechanical strength is insufficient for the substrate, while if the thickness exceeds 250 $\mu$m, it is not easy to wind the film around a roll due to the lack of flexibility.

(Color Tone Correcting Layer)

The color tone correcting layer is a layer which contains a pigment having a color tone correcting function, corrects the color tone of transmitting visible light, and improves the quality of the image on the PDP and, more concretely, makes increase in the contrast and clarity possible. It is possible to adjust the transmittance of the display filter as a whole using the color tone correcting layer, which thus works to adjust the reflection performance.

Color tone correction is achieved when visible light of a specific wavelength is selectively absorbed of visible lights that transmit through the display filter. Accordingly, the coloring material contained in the color tone correcting layer selectively absorbs visible light of a specific wavelength, and for the coloring material, either a dye or a pigment can be used. Here, "selectively absorb visible light of a specific wavelength" means that light in a specific wavelength region is specifically absorbed of lights in the wavelength region of visible light (wavelength: 380 nm to 780 nm). The wavelength region specifically absorbed by the coloring material may be a single wavelength region or two or more wavelength regions.

Concrete examples of coloring materials which absorb a specific wavelength are organic pigments, organic dyes and inorganic pigments, such as azo based substances, condensed azo based substances, phthalocyanine based substances, anthraquinone based substances, indigo based substances, perinone based substances, perylene based substances, dioxazine based substances, quinacridone based substances, methine based substances, isoindrinone based substances, quinophthalone bases substances, pyrrole based substances, thio-indigo based substances and metal complex based substances. Among them, phthalocyanine based and anthraquinone based coloring materials are particularly preferable, because of their excellent resistance to weather. The color tone correcting layer may contain only one of the above coloring materials, or two or more.

The color of the display filter when white light transmits through it may be required to be neutral gray or blue gray. This is because a white having a slightly higher color temperature than standard white is preferred in a case where the light emitting property of the PDP and the contrast must be maintained or increased. When this requirement is met, the above coloring materials can be applied.

The color tone correcting layer can take various modes, as long as it contains a coloring material having a color tone correcting function. The color tone correcting layer can be formed in accordance with a suitable method depending on the mode. In a case of mode of a layer containing a coloring material having a color tone correcting function in an adhesive, the adhesive to which a coloring material is added may be applied so as to form a color tone correcting layer having a desired thickness. Commercially available adhesives can be used as the adhesive, and concretely, preferable examples are adhesives of acrylate copolymers, polyvinyl chlorides, epoxy resins, polyurethane, vinyl acetate copolymers, styrene-acryl copolymers, polyester, polyamide, polyolefin, styrene-butadiene copolymer based rubbers, butyl rubbers and silicone resins.

In a case of a mode where the color tone correcting layer is formed by carrying out a coloring processing on the transparent resin layer or the transparent substrate layer, the coloring material having a color tone correcting function may be applied on the transparent resin layer or transparent substrate layer as it its or after being dissolved in a solvent and dried, so that a color tone correcting layer having a desired thickness can be formed. As the solvent used for this, ketone based solvents such as cyclohexanone, ether based solvents, ester based solvents such as butyl acetate, ether alcohol based solvents such as ethyl cellosolve, ketone alcohol based solvents such as diacetone alcohol, and aromatic based solvents such as toluene can be cited.

In a case where the color tone correcting layer is a transparent resin layer containing a coloring material having a color tone correcting function, the thermoplastic resin, which is the raw material for the transparent resin layer, is dissolved in a desired solvent, and the solution obtained by adding a coloring material having a color tone correcting function may be applied and dried, so that a color tone correcting layer having a desired thickness can be formed. The solvent used here may be a solvent in which the resin material can be dissolved, and the dye or pigment to be added can be dissolved and dispersed. As the solvent used for this, ketone based solvents such as cyclohexanone, ether based solvents, ester based solvents such as butyl acetate, ether alcohol based solvents such as ethyl cellosolve, ketone alcohol based solvents such as diacetone alcohol, and aromatic based solvents such as toluene can be cited.

In the method for forming the color tone correcting layer by applying a solution including a coloring material having a color tone correcting function or a solution including a coloring material having a color tone correcting function and a resin material for the transparent resin layer, dip coating methods, roll coating methods, spray coating methods, gravure coating methods, comma coating methods and die coating methods can be used as the application method. It is possible to use these coating methods continuously, and the productivity is excellent in comparison with batch type vapor deposition methods and the like. Spin coating methods in which a thin, uniform application film can be formed can be adopted.

It is preferable for the thickness of the color tone correcting layer to be 0.5 $\mu$m or more in order to obtain a sufficient color tone correcting function. It is also preferable for the thickness to be 40 $\mu$m or less, because the light transmission, more concretely the transmission of visible light, is excellent, and it is more preferable to be 1 $\mu$m to 25 $\mu$m. If the thickness of the color tone correcting layer exceeds 40 $\mu$m, the solvent tends to remain when the color tone correcting layer is formed by applying the solution including a coloring material, and thus, the operation becomes difficult when the color tone correcting layer is formed, which is not preferable.

If the color tone correcting layer is an adhesive layer or a transparent resin layer containing a coloring material having a color tone correcting function, it is preferable for 0.1 mass % or more of the coloring material to be contained in the adhesive or the thermoplastic resin, and it is more preferable for 1 mass % or more to be contained. It is preferable to keep the amount of the coloring material having a color tone correcting function 10 mass % or less in order to preserve the physical property of the adhesive layer or transparent resin layer.

(Infrared Ray shielding Layer)

Near infrared rays having the same intensity as those emitted from the PDP cause malfunctioning when working on periphery electronics such as remote controllers and cordless phones, and therefore, it is necessary to cut the light in the infrared ray region to such a level that no problems are caused during use. The wavelength region which causes problems is 800 nm to 1000 nm, and it is preferable for the transmittance of light in this wavelength region to be 20 % or less, and it is more preferable to be 10 % or less. In order to cut near infrared rays, a coloring material having a near infrared ray absorbing function where the wavelength of maximum absorption is 750 nm to 1011 nm is preferably applied, and concrete examples are polymethine based compounds, phthalocyanine based compounds, naphthalocyanine based compounds, metal complex based compounds, aminium based compounds, immonium based compounds, diimmonium based compounds, anthraquinone based compounds, dithiol metal complex based compounds, naphthoquinone based compounds, indolphenol based compounds, azo based compounds and triallylmethane based compounds. Metal complex based compounds, aminium based compounds, phthalocyanine based compounds, naphthalocyanine compounds and diimmonium based compounds are particularly preferable. Here, only one coloring material having a near infrared ray absorbing function may be mixed, or two or more may be mixed.

The structure, method for formation and thickness of the near infrared ray absorbing layer are the same as with the above color tone correcting layer. The near infrared ray absorbing layer may be the same as the color tone correcting layer, that is, the color tone correcting layer may contain both a coloring material having a color tone correcting function and a coloring material having a near infrared ray absorbing function, or the infrared ray shielding layer may be provided separately from the color tone correcting layer. As for the amount of near infrared ray absorbing material contained in, it is preferable to be 0.1 mass % or more in the binder resin, and it is more preferable to be 2 mass % or more. It is preferable to keep the total amount of the coloring material having a color tone correcting function and the near infrared ray absorbing agent 10 mass % or less in order to preserve the physical property of the adhesive layer or transparent resin layer containing the infrared ray absorbing agent.

(Ne Cutting Layer)

It is preferable for one or more color tone correcting agents to be mixed into the infrared ray shielding layer or color tone correcting layer in order to selectively absorb or attenuate extra colored light (mainly in the wavelength region of 560 nm to 610 nm) from the discharge gas sealed inside the PDP panel, for example a gas having neon and xenon as its two components. In this configuration having a coloring material, extra light due to being emitted from the discharge gas is absorbed and attenuated, of visible lights emitted from the display screen on the PDP. As a result, the display color of visible light emitted from the PDP panel can be made close to the target display color, and thus, natural color tones can be displayed.

(Ultraviolet Ray Shielding Layer)

The ultraviolet ray shielding layer works to prevent the coloring material included in the color tone correcting layer and the infrared ray shielding layer located on the panel side against to itself from deteriorating. It is preferable for the transmittance at a wavelength of 380 nm to be 5 % or less in the ultraviolet ray shielding layer. A transparent resin layer or an adhesive layer containing an ultraviolet ray absorbing agent can be used as the ultraviolet ray shielding layer. In a highly preferable aspect, the transparent resin layer may contain an ultraviolet ray absorbing agent in a configuration where an anti-reflection layer/hard coat layer/transparent resin layer...are layered from the top surface layer on the viewer side.

It is preferable for the Tg of the layer including an ultraviolet ray absorbing agent to be 60°C or higher, and it is more preferable for it to be 80°C or higher. When a thermoplastic resin of which the TG is low contains an ultraviolet ray absorbing agent, the ultraviolet ray absorbing agent moves to the interface with a glue or the interface with an adhesive, and thus, there is a risk that the viscosity or the adhesiveness may be affected. If the Tg of the thermoplastic resin containing an ultraviolet ray absorbing agent is 60°C or higher, the possibility of the ultraviolet ray absorbing agent moving inside the transparent resin layer is reduced, and the adhesiveness is not affected in a case where the transparent resin layer is joined to other components in the display filter, concretely, other transparent resin layers which are part of the transparent substrate layer, the color correcting layer or the anti-reflection layer, via an interlayer adhesive layer.

Examples of resins for forming the transparent resin layer having a Tg of 60°C or higher are aromatic polyesters such as polyethylene terephthalate and polyethylene naphthalate, aliphatic polyamide such as nylon 6 and nylon 66, aromatic polyamide and polycarbonate. Among them, aromatic polyester is preferable, and polyethylene terephthalate from which a biaxially expanded film having excellent resistance to heat and mechanical strength can be formed is particularly preferable.

Preferable examples of the ultraviolet ray absorbing agent are salicylate based compounds, benzophenone based compounds, benzotriazole based compounds, cyanoacrylate based compounds, benzoxazinone based compounds and annular iminoester based compounds. Benzoxazinone based compounds are most preferable from the viewpoint of the ultraviolet ray shielding property at 380 nm to 390 nm, color tone, and the like. These compounds may be used alone, or two or more may be used together. It is more preferable to use a stabilizer such as HALS (hindered amine based photostabilizer), and an antioxidant, together with this.

Examples of benzoxazinone based compounds are 2-p-nitrophenyl-3,1-benzoxazin-4-one, 2-(p-benzoyl phenyl)-3,1-benzoxazin-4-one, 2-(2-naphthyl)-3,1-benzoxazin-4-one, 2-2'-p-phenylene bis(3,1-benzoxazin-4-one), and 2,2'-(2,6-naphthylene) bis(3,1-benzoxazin-4-one).

It is preferable for the ultraviolet ray absorbing agent content in the ultraviolet ray shielding layer to be 0.1 mass % to 5 mass %, and it is more preferable to be 0.2 mass % to 3 mass %. If the ultraviolet ray absorbing agent content is 0.1 mass % to 5 mass %, ultraviolet rays which enter the display filter on the viewer side can be absorbed, the effects of preventing the coloring material included in the color tone correcting layer from deteriorating are excellent, and the strength of the transparent resin layer and the adhesive layer is not affected.

The method for adding an ultraviolet ray absorbing agent to the ultraviolet ray shielding layer is not particularly limited, and examples are addition of an ultraviolet ray absorbing agent during the polymerization process for a thermoplastic resin, kneading of an ultraviolet ray absorbing agent into a thermoplastic resin during the melting process before film formation, and impregnation of an ultraviolet ray absorbing agent in a biaxially expanded film. In particular, it is preferable to knead an ultraviolet ray absorbing agent into a thermoplastic resin during the melting process before film formation in order to prevent the degree of polymerization of the thermoplastic resin from lowering. Kneading of an ultraviolet ray absorbing agent can be carried out in accordance with a method for directly adding ultraviolet ray absorbing agent powders, in accordance with a master batch method for adding a master polymer containing a high concentration of an ultraviolet ray absorbing agent to a polymer for film formation or the like.

It is preferable for the thickness of the ultraviolet ray shielding layer to be in a range from 5 $\mu$m to 250 $\mu$m, it is more preferable to be 50 $\mu$m to 200 $\mu$m, and it is most preferable to be 80 $\mu$m to 200 $\mu$m. If the thickness of the ultraviolet ray absorbing layer is in a range from 5 $\mu$m to 250 $\mu$m, the effects of absorbing ultraviolet rays which enter the display filter on the viewer side are excellent, and light transmission, concretely transmission of visible light, is excellent.

(Anti-reflection Layer) The anti-reflection layer includes a thin film of a single layer formed of a fluorine based transparent polymer resin, magnesium fluoride, a silicone resin or silicon oxide having a refractive index as low as 1.5 or less in the visible light region, preferably 1.4 or less, so as to have an optical film thickness of a 1/4 wavelength, and a multilayer body where two or more layers of thin films of inorganic compounds such as metal oxides, fluorides, silicates, nitrides and sulfides, or organic compounds such as silicone resins, acryl resins and fluorine resins having different refractive indices are layered. As a configuration having a well-balanced performance and cost, a configuration where a layer with a low refractive index and a layer with a high refractive index are layered from the top surface layer is preferable. The anti-reflection layer is usually layered on the hard coat layer.

The method for forming an anti-reflection layer is not particularly limited, and a method for applying a paint through wet coating is preferable, taking the balance between cost and performance into consideration. As the method for applying a paint, microgravure coating, spin coating, dip coating, curtain flow coating, roll coating, spray coating and spreading application methods are preferably used. Microgravure coating is preferably used from the viewpoint of uniformity in the thickness of application. The respective coating films can be formed through a heating step, a drying step and a curing step using heat or ultraviolet rays after the application of the paint.

The anti-reflection layer is provided on the top surface of the display filter. Therefore, the resistance to scratching is preferably 3rd grade or higher, so that scratching can be prevented when dust and the like attached to the surface of the anti-reflection layer are wiped off with a cloth. It is more preferable for the resistance to be 4th grade or higher. The resistance to scratching can be classified in the following five stages through observation with the eye after the surface on the anti-reflection layer side is rubbed for ten strokes with a load of 250 g applied with steel wool of #0000, a stroke width of 10 cm and a speed of 30 mm/sec. 5th grade: no scratching at all; 4th grade: 1 to 5 scratches; 3rd grade: 6 to 10 scratches; 2nd grade: 11 or more scratches; 1st grade: countless scratches on the entire surface.

As for the surface coarseness on the anti-reflection layer, it is preferable for the average coarseness along the center line Ra to be 0.5 to 15.0 nm, and it is preferable for the maximum height Rmax to be 5 to 150 nm. If Ra and Rmax are beneath these ranges, the effects of preventing reflection sometimes deteriorate. If they exceed these ranges, the haze and resistance to scratching may be poor, and it may become difficult to wipe off fingerprints, which is not preferable.

The anti-reflection layer is not particularly limited, as long as it has anti-reflection property, and particularly preferable aspects for the anti-reflection layer will be described below.

A particularly preferable anti-reflection layer satisfies three conditions in terms of the spectrum of the absolute reflection of 5 degree at a wavelength of 400 nm to 700 nm: (1) the minimum reflectance is 0.6 % or less, (2) the maximum reflectance is 2.5 % or less, and (3) the difference between the maximum reflectance and the minimum reflectance is less than 2.5 %. If the minimum reflectance exceeds 0.6 %, the anti-reflection property is insufficient, which is not preferable. If the maximum reflectance exceeds 2.5 %, the reflectance becomes high in the vicinity of 450 nm and 700 nm, and thus, the color tone of reflected light becomes bluish or reddish, which is not preferable. The minimum reflectance is more preferably 0.5 % or less, and still more preferably 0.3 % or less. The maximum reflectance is more preferably 2.0 % or less. The difference between the maximum reflectance and the minimum reflectance is preferably less than 2.0 %, and more preferably less than 1.5 %. When all of these conditions are met, a flat reflection spectrum can be obtained, and the color tone becomes neutral, which is preferable.

In a particularly preferable anti-reflection layer, the refractive indices in a low refractive index layer and a high refractive index layer are adjusted as follows in order to adjust the minimum reflectance, the maximum reflectance and the difference of reflectance of the spectrum of absolute reflection at wavelengths of 400 nm to 700 nm to within the above range.

The refractive index (nL) of the low refractive index layer is preferably 1.23 to 1.42, more preferably 1.34 to 1.38. The refractive index (nH) of the high refractive index layer is preferably 1.55 to 1.80, more preferably 1.60 to 1.75. The difference of refractive index between the low refractive index layer and the high refractive index layer is preferably 0.15 or more.

It is also preferable to adjust the refractive index of the hard coat layer. The refractive index (nG) of the hard coat layer is preferably 1.45 to 1.55.

It is preferable for the thickness (dH) of the high refractive index layer to be such that the product (optical thickness) of the refractive index (nH) of the high refractive index layer and the thickness (dH) of the high refractive index layer is 1.0 to 1.7 times 1/4 of the wavelength ($1/4\lambda$) of visible light of which reflection is desired to be prevented in order for the anti-reflection layer to have a flat reflection spectrum, and it is more preferable for it to be 1.3 to 1.6 times greater. If the optical thickness is less than 1.0 times the wavelength ($\lambda$), the difference between the maximum reflectance and the minimum reflectance exceeds 2.5 %, which is not preferable. Meanwhile, if the optical thickness exceeds 1.7 times the wavelength ($\lambda$), the minimum reflectance becomes higher than 0.6 %, and thus, the anti-reflection property becomes insufficient, which is not preferable. Here, it is usually preferable for the wavelength ($\lambda$) of visible light of which the reflection is desired to be prevented to be in a range from 450 nm to 650 nm.

The thickness (dH) of the high refractive index layer is preferably in a range from 100 nm to 300 nm, more preferably in a range from 100 nm to 200 nm, taking the above preferable range for the refractive index (nH) of the high refractive index layer and the wavelength ($\lambda$) of light of which the reflection is desired to be prevented into consideration.

As for a preferable range for the thickness (dL) of the low refractive index layer, it is preferable for the thickness (dL) to be such that the product of the refractive index (nL) of the low refractive index layer and the thickness (dL) of the low refractive index layer is 0. 7 to 1. 0 times the 1/4 wavelength ($1/4\lambda$) of visible light of which the reflectance is desired to be prevented, and it is more preferable to be 0.75 to 0. 95 times. Taking these into consideration, the thickness (dL) of the low refractive index layer is preferably in a range from 70 nm to 160 nm, more preferably in a range from 80 nm to 140 nm, and still more preferably in a range from 85 nm to 105 nm in order for the anti-reflection layer to have a flat reflection spectrum.

It is preferable for the ratio (dH/dL) of the thickness (dH) of the high refractive index layer to the thickness (dL) of the low refractive index layer to be 1.0 to 1.9 in order to obtain a flat reflection spectrum. If dH/dL is lower than 1.0, the maximum reflectance is higher than 2.5 %, and thus, the difference between the maximum reflectance and the minimum reflectance exceeds 2.5 %, and the reflection spectrum becomes V shape, and interference colors of red and blue appear. Meanwhile, if dH/dL exceeds 1.9, the minimum reflectance is higher than 0.6 % and the anti-reflection property becomes insufficient, though a flat reflection spectrum can be obtained. If dH/dL is more preferably 1.1 to 1.8, still more preferably 1.2 to 1.7, the flat reflection spectrum and the low minimum reflectance are achieved.

Dust easily adheres to the display filter due to static electricity, and in addition, the user may receive an electrical shock when making contact with the display filter and causing discharge, and therefore, it is preferable to provide anti-static property. In order to provide a desired degree of anti-static property in the high refractive index layer, it is preferable for the surface resistance value of the layer to be $1 \times 10^{11}$ Ω/□ or less, and it is more preferable to be $1 \times 10^{10}$ Ω/□ or less.

It is preferable for components of the high refractive index layer in the anti-reflection layer to be a resin composition in which metal compound particles are dispersed in order to provide anti-static property on the surface of the anti-reflection layer. A (meth)acrylate compound is preferably used as the resin component in order to increase the resistance to solvents and the hardness of films formed through radical polymerization by irradiation with active rays. Furthermore, multifunctional (meth)acrylate compounds having two or more (meth)acryloyl groups in one molecule are particularly preferable, because they increase the resistance to solvents. Preferable examples of (meth)acrylate compounds are trifunctional (meth)acrylates such as pentaerythritol tri(meth)acrylate, trimethylol propane tri(meth)acrylate, glycerol tri(meth)acrylate, ethylene modified trimethylol propane tri(meth)acrylate and tris-(2-hydroxyethyl)-isocyanurate tri(meth)acrylate, and tetra or more functional (meth)acrylates such as pentaerythritol tetra(meth)acrylate, dipentaerythritol penta(meth)acrylate and dipentaerythritol hexa(meth)acrylate.

As the resin component, (meth) acrylate compounds having an acid functional group such as a carboxyl group, a phosphate group or a sulfonate group can also be used in order to improve the dispersion of metal compound particles. Concrete examples are unsaturated carboxylic acids such as acrylic acid, methacrylic acid, crotonic acid, 2-methacryloyloxyethyl succinic acid and 2-methacryloyloxyethyl phthalic acid, acrylic acid phosphates such as mono(2-(meth)acryloyloxyethyl) acid phosphate and diphenyl-2-(meth)acryloyloxyethyl phosphate, and 2-sulfon ester (meth)acrylate. In addition to these, (meth)acrylate compounds having a polar bond such as an amide bond, a urethane bond, or an ether bond, can be used.

Various types of conductive metal oxide particles are preferably used as the metal compound particles. Particularly preferable examples are tin containing antimony oxide particles (ATO), zinc containing antimony oxide particles, tin containing indium oxide particles (ITO), zinc oxide/aluminum oxide particles and antimony oxide particles. More preferably, tin containing indium oxide particles (ITO) is used.

Particles in which the diameter of average primary particles (diameter corresponding to that of spheres measured in accordance with BET method) is 0.5 $\mu$m or less are preferably used as the metal compound particles. More preferable particles have a particle diameter of 0.001 $\mu$m to 0.3 $\mu$m, still more preferably 0.005 $\mu$m to 0.2 $\mu$m. When the average particle diameter exceeds this range, the transparency of the formed coating film (a high refractive index layer) is lower. If the average particle diameter is below this range, the metal compound particles easily coagulate, and the haze value of the formed coating film (a high refractive index layer) increases.

As for the mixture ratio of the components in the high refractive index layer, it is preferable for the mass ratio of the resin component to the metal compound particles [(A)/(B)] to be 10/90 to 30/70, and it is more preferable to be 15/85 to 25/75. If the metal compound particles are in this preferable range, the resulting film has a high transparency and excellent conductance, physical strength and chemical strength.

Organic metal compounds such as conductive polymers, for example polypyrrole, polythiophene and polyaniline, metal alcoholate and chelate compounds can further be mixed in the components of the high refractive index layer in order to further increase the conductive effects.

When the high refractive index layer is formed, an initiator may be used in order to accelerate curing of the applied resin component. In order to prevent the sensitivity of the initiator from lowering due to the presence of oxygen, an amine compound may be mixed in the photopolymerization initiator. Furthermore, various types of additives such as polymerization prohibiting agents, curing catalysts, antioxidants, dispersing agents, leveling agents and silane coupling agents may be optionally mixed therein. In order to increase the surface hardness, inorganic particles such as alkyl silicates and products obtained by hydrolysis thereof, colloidal silica, dry silica, wet silica and titanium oxide, and silica fine particles dispersed as colloids can further be mixed therein.

The high refractive index layer preferably has a total light transmittance of 40 % or more, and more preferably 50 % or higher from the viewpoint of the clarity and transparency.

The high refractive index layer is preferably formed by preparing an application liquid in which a solvent is mixed, applying the application liquid on the hard coat layer, and then drying and curing it. The solvent is mixed to improve the operability during application or printing and to improve the dispersion of metal compound particles, and various known organic solvents can be used as long as they dissolve the resin component. Organic solvents having a boiling point of 60°C to 180°C are preferable from the viewpoint of the viscosity stability and the drying property of the application liquid. Furthermore, organic solvents having oxygen atoms are preferable because of their affinity with metal compound particles. Concretely, preferable examples of organic solvents are methanol, ethanol, isopropyl alcohol, n-butanol, tert-butanol, ethylene glycol monomethyl ether, 1-methoxy-2-propanol, propylene glycol monomethyl ether, cyclohexanone, butyl acetate, isopropyl acetone, methyl ethyl ketone, methyl isobutyl ketone, diacetylacetone and acetyl acetone. These may be used alone, or two or more may be mixed for use.

The amount of organic solvent depends on the application means or printing means, and the solvent is mixed so that the application liquid has such a viscosity as to be easily workable. It is usually preferable for the concentration of the solid in the application liquid to be 60 mass % or less, more preferably 50 mass % or less. As the method for preparing an application liquid, any method can be adopted, but in accordance with a preferable method, metal compound particles are added to a solution where a general resin component is dissolved in an organic solvent and dispersed by means of a dispersing machine such as a paintshaker, a ball mill, a sand mill, a three-roll, an attritor, or a homogenizer, and thereafter, a photopolymerization initiator is added to the mixture and dissolved uniformly.

It is preferable for the low refractive index layer to be obtained by coating a paint composition made of hollow silica fine particles, a siloxane compound, a curing agent and a solvent in order to lower the refractive index and the surface reflectance.

It is preferable for the low refractive index layer to have a siloxane compound and silica fine particles firmly combined as materials for the matrix in order to increase the surface hardness and improve the resistance to scratching. Therefore, it is preferable to allow a reaction between the siloxane compound and the surface of the silica fine particles in advance so that the two combine at the preparatory stage for the paint composition before coating. The paint composition can be obtained by hydrolyzing the silane compound in the solvent in the presence of silica fine particles by using an acid catalyst to form a silanol compound, and thereafter, allowing a condensation reaction in the silanol compound.

The resulting paint contains a siloxane compound which is a condensate of a silane compound. The silane compound may be hydrolyzed, and may contain a silanol compound which is not condensed.

Concretely, preferable examples of silane compounds are trifluoromethyl trimethoxysilane, trifluoromethyl triethoxysilane, trifluoropropyl trimethoxysilane, trifluoropropyl triethoxysilane vinyltrialcoxysilane, 3-methacryloxypropyl trialcoxysilane, methyl trimethoxysilane, methyl triethoxysilane, phenyl trimethoxysilane, phenyl triethoxysilane, dimethyl dialkoxysilane, tetramethoxysilane and tetraethoxysilane. These silane compounds may be used alone, or two or more may be combined for use.

It is preferable to use one of the fluorine containing silane compounds as an essential component, and combine one or more of the other silane compounds for use in order to lower the refractive index. The amount of fluorine containing silane compound is preferably 20 mass % to 80 mass % relative to the total amount of the silane compounds, more preferably 30 mass % to 60 mass %. If the amount of fluorine containing silane compound is less than 20 mass %, the reduction in the refractive index may be insufficient. Meanwhile, if the amount of fluorine containing silane compound exceeds 80 mass %, the hardness of the coating film may lower.

The siloxane compound content is preferably 20 mass % to 70 mass % relative to the total amount of the coating film when a coating film is formed, more preferably 30 mass % to 60 mass %. It is preferable for the siloxane compound content to be in this range in order to lower the refractive index of the coating film and increase the hardness of the coating film. Therefore, it is preferable for the siloxane compound content in the paint relative to the total of the components, excluding the solvent, to be within the above range.

It is preferable for the average particle diameter of the silica fine particles used in the low refractive index layer to be 1 nm to 200 nm, and it is more preferable for the average particle diameter to be 1 nm to 70 nm. If the average particle diameter is lower than 1 nm, bonding with the matrix material becomes insufficient, and the hardness of the coating film may be made low. Meanwhile, if the average particle diameter exceeds 200 nm, less spaces are created between particles when a great number of particles are introduced, and thus, sufficient effects of reducing the refractive index cannot be obtained. Here, it is preferable to measure the particle diameter of the silica fine particles before adding them to the paint by using a particle counter. After the formation of the coating film, a method for measuring the particle diameter of the silica fine particles in the coating film by using an electronic scanning microscope or transmission electron microscope is preferable.

It is preferable for the average particle diameter of the silica fine particles used in the low refractive index layer to be smaller than the film thickness of the formed coating film. If the average particle diameter is more than the film thickness of the coating film, the silica fine particles are exposed on the surface of the coating film, the anti-reflection property is lost, and in addition, the hardness on the surface of the coating film deteriorates and the resistance to pollution lowers.

As the silica fine particles used in the low refractive index layer, silica fine particles having a silanol group on the surface are preferable because they easily react with the siloxane compound in the matrix. Hollow silica fine particles are preferable in order to lower the refractive index of the coating film. In general, the refractive index of silica fine particles without hollow therein is 1.45 to 1.50, and therefore, the effects of lowering the refractive index are small. Meanwhile, the refractive index of the hollow silica fine particles is 1.20 to 1.40, and therefore, the effects of lowering the refractive index are great when the particles are introduced. As the hollow silica fine particles, silica fine particles having inner cavities surrounded by outer shell and porous silica fine particles having a large number of cavities can be cited. Among them, porous silica fine particles having high strength are preferable, taking the hardness of the coating film into consideration. It is preferable for the refractive index of the fine particles to be 1.20 to 1.35. It is preferable for the average particle diameter of the hollow silica fine particles to be 5 nm to 100 nm. The refractive index of silica fine particles can be measured in accordance with the method disclosed in Japanese Unexamined Patent Publication 2001-233611, paragraph [0034]. The hollow silica fine particles can be manufactured in accordance with the method described in, for example, Japanese Unexamined Patent Publication 2001-233611, paragraphs [0033] to [0046], and the method described in Japanese Patent No. 3272111, paragraph [0043]. Commercially available products can also be used.

The content of the silica fine particles in the low refractive index layer is preferably 30 mass % to 80 mass % relative to the total amount of the coating film when a coating film is formed, and more preferably 40 mass % to 70 mass %. Accordingly, it is preferable for the content of the silica fine particles in the paint to be within the above range relative to the total components, excluding the solvent. When the coating film contains silica fine particles within this range, the refractive index can be lowered, and in addition, the hardness of the coating film can be increased. If the content of the silica fine particles is lower than 30 mass %, the effects of lowering the refractive index due to the spaces between the particles are lowered. If the content of the silica fine particles exceeds 80 mass %, an island phenomenon frequently occurs in the coating film, and thus, the hardness of the coating film lowers and the refractive index becomes uneven depending on the area, which is not preferable.

In addition, the paint composition for forming the low refractive index layer as described above can be obtained by hydrolyzing a silane compound in a solvent in the presence of silica fine particles by means of an acid catalyst to form a silanol compound, and thereafter, allowing a condensation reaction for the silanol compound. In this hydrolyzing reaction, it is preferable for the acid catalyst and water to be added to the solvent over a period of one minute to 180 minutes, and thereafter, to be allowed to the reaction at room temperature to 80°C for one minute to 180 minutes. When the hydrolyzing reaction is conducted under these conditions, a sudden reaction can be prevented. The temperature for the reaction is more preferably 40°C to 70°C. After obtaining a silanol compound through the hydrolyzing reaction, it is preferable to heat the reacted liquid to a temperature between 50°C and a boiling temperature of the solvent for one hour to 100 hours to conduct a condensation reaction. In order to increase the degree of polymerization of the siloxane compound, it is possible to heat again or add a base catalyst.

As the acid catalyst used in the hydrolyzing reaction, acid catalysts such as hydrochloric acid, acetic acid, formic acid, nitric acid, oxalic acid, hydrochloric acid, sulfuric acid, phosphoric acid, polyphosphoric acid, multivalent carboxylic acid and its anhydride, and ion exchange resins, can be cited. Acid solutions using formic acid, acetic acid, or phosphoric acid, are particularly preferable. The added amount of the acid catalyst is preferably 0.05 mass % to 10 mass % relative to the total amount of the silane compound used at the time of the hydrolyzing reaction, and more preferably, 0.1 mass % to 5 mass %. If the amount of the acid catalyst is lower than 0.05 mass %, the hydrolyzing reaction does not sometimes progress sufficiently. If the amount of the acid catalyst exceeds 10 mass %, there is a risk that the hydrolyzing reaction may go out of control.

The solvent is not particularly limited and is determined by taking the stability, the wettability and the volatility of the paint composition into consideration. It is possible to use a mixture of two or more solvents in addition to one solvent. Concretely, preferable examples of the solvents are described in the following.

It is preferable for the amount of the solvent used at the time of the hydrolyzing reaction to be within a range from 50 mass % to 500 mass % relative to the total amount of the silane compound, and it is more preferable to be within a range from 80 mass % to 200 mass %. If the amount of the solvent is lower than 50 mass %, the reaction may go out of control and cause gelation. Meanwhile, if the amount of the solvent exceeds 500 mass %, the hydrolysis does not sometimes progress.

Ion-exchanged water is preferable for the water used in the hydrolyzing reaction. It is preferable for the amount of water to be within a range from 1.0 mole to 4.0 moles per one mole of the silane compound.

As the curing agent, various types of curing agents and three-dimensional cross-linking agents, which accelerate the curing of the paint composition or facilitate the curing, can be used. Concrete examples of the curing agents are nitrogen containing organic substances, silicone resin curing agents, various types of metal alcoholates, various types of metal chelate compounds, isocyanate compounds and polymers thereof, melamine resins, multifunctional acryl resins and urea resins. These may be added alone or two or more of these may be added. Among them, metal chelate compounds are preferable for use from the viewpoints of the stability of the curing agent and the processability of the obtained coating film. As the metal chelate compound used, titanium chelate compounds, zirconium chelate compounds, aluminum chelate compounds and magnesium chelate compounds can be cited. Among them, aluminum chelate compounds and/or magnesium chelate compounds having a low refractive index are preferable in order to lower the refractive index. These metal chelate compounds can be easily obtained by allowing reaction between a metal alkoxide and a chelating agent. Examples of the chelating agent are β-diketone such as acetyl acetone, benzoyl acetone and dibenzoyl methane, and β-ketoacid ester such as acetoacetic ester and ethyl benzoylacetate. Concretely, preferable examples of the metal chelate compounds are aluminum chelate compounds such as ethyl acetoacetate aluminum diisopropylate, aluminum tris (ethyl acetoacetate), alkyl acetoacetate aluminum diisopropylate, aluminum monoacetylacetate bis (ethyl acetoacetate) and aluminum tris (acetyl acetate) , and magnesium chelate compounds such as ethyl acetoacetate magnesium monoisopropylate, magnesium bis (ethyl acetoacetate), alkyl acetoacetate magnesium monoisopropylate and magnesium bis (acetylacetonate). Among them, aluminum tris (acetylacetonate), aluminum tris (ethyl acetoacetate), magnesium bis (acetylacetonate) and magnesium bis (ethyl acetoacetate) are preferable. Aluminum tris (acetylacetonate) and aluminum tris (ethyl acetoacetate) are more preferable, taking the stability when preserved and availability into consideration. The added amount of the curing agent is preferably 0.1 mass % to 10 mass % relative to the total amount of the silane compound in the paint composition, and more preferably, 1 mass % to 6 mass %. The total amount of the silane compound is herein referred to the amount which includes all of the silane compound, hydrolysate thereof, as well as the condensate thereof. If the content is lower than 0.1 mass %, the hardness of the obtained coating film lowers. Meanwhile, if the content exceeds 10 mass %, though the curing becomes sufficient so that the hardness of the obtained coating film increases, the refractive index also increases, which is not preferable.

It is also preferable for the paint composition to be a mixture of a solvent where the boiling point is 100°C to 180°C under the ambient pressure and a solvent where the boiling point is lower than 100°C under the ambient pressure. When the paint composition includes a solvent where the boiling point is 100°C to 180°C under the ambient pressure, the applicability of the application liquid becomes excellent so that a coating film of which the surface is flat can be obtained. When the paint composition includes a solvent where the boiling point is lower than 100°C under the ambient pressure, the solvent effectively evaporates at the time of the formation of the coating film so that a coating film having a high hardness can be obtained. That is, a coating film having a flat surface and a high hardness can be obtained.

Concrete examples of the solvent where the boiling point is 100°C to 180°C under the ambient pressure are ethers such as ethylene glycol monomethyl ether, ethylene glycol monoethyl ether, propylene glycol monomethyl ether, propylene glycol monoethyl ether, propylene glycol monopropyl ether, propylene glycol monobutyl ether, propylene glycol mono-t-butyl ether, ethylene glycol dimethyl ether, ethylene glycol diethyl ether and ethylene glycol dibutyl ether; acetates such as ethylene glycol monoethyl ether acetate, propylene glycol monomethyl ether acetate, propylacetate, butyl acetate, isobutyl acetate, 3-methoxy butyl acetate, 3-methyl-3-methoxy butyl acetate, methyl lactate, ethyl lactate and butyl lactate; ketones such as acetyl acetone, methyl propyl ketone, methyl butyl ketone, methyl isobutyl ketone, cyclopentanon and 2-heptanone; alcohols such as butanol, isobutyl alcohol, pentanol, 4-methyl-2-pentanol, 3-methyl-2-butanol, 3-methyl-3-methoxy-1-butanol and diacetone alcohol; and aromatic hydrocarbons such as toluene and xylene. These may be used alone or mixed for use. Among them, examples of particularly preferable solvents are propylene glycol monomethyl ether, propylene glycol monoethyl ether, propylene glycol monopropyl ether and diacetone alcohol.

As the solvents where the boiling point is lower than 100°C under the ambient pressure, methanol, ethanol, isopropanol, t-butanol and methyl ethyl ketone can be cited. These may be used alone or mixed for use.

It is preferable for the total contents of the solvents in the paint composition to be within a range from 1300 mass % to 9900 mass % relative to the total contents of the silane compound, and it is more preferable to be within a range from 1500 mass % to 6000 mass %. If the total contents of the solvents are lower than 1300 mass % or exceed 9900 mass %, it becomes difficult to form a coating film having a predetermined film thickness. The total contents of the silane compound are herein referred to as the amount which includes all of the silane compound, the hydrolysis thereof and the condensate thereof.

(Electromagnetic Wave Shielding Layer)

Intensive electromagnetic waves leak from the panel of PDP due to their structure and the principle of operation. In recent years, the effects of the electromagnetic waves leaked from electronics on human bodies and other electronics have been discussed, and in Japan, for example, the amount of leakage is required to be kept within the reference value set by the VCCI (Voluntary Control Council for Interference by processing equipment electronic office machine). Concretely, according to the VCCI, the intensity of the radiating electrical field must be less than 50 dB $\mu$V/m in Class A for the regulation value for business purposes, and the intensity must be less than 40 dB $\mu$V/m in Class B for the regulation value for public use. The intensity of the radiating electrical field of the PDPs exceeds 50 dB $\mu$V/m (in the case of 40-inch screens) within a band from 20 MHz to 90 MHz, and therefore, PDPs cannot be subjected to home use without being changed. Therefore, the provision of an electromagnetic wave shielding layer becomes essential. Conductivity is required to achieve electromagnetic wave shielding performance, and the conductivity required for the electromagnetic wave shield for the PDPs is 3 $\Omega/\square$ or less in the surface resistance, preferably 1 $\Omega/\square$ or less, and more preferably 0.5 $\Omega/\square$ or less.

As the electromagnetic shielding layer, the conductive film disclosed in Japanese Unexamined Patent Publication 2003-5663 can be cited as an example. In this gazette, a conductive mesh film and a metal transparent conductive film are cited as examples of the conductive film.

The metal transparent conductive film is obtained by layering a transparent metal thin film on a transparent resin layer. More concretely, a metal thin film such as ITO, AZO, or AgPd, is layered on a transparent resin film in accordance with a sputtering method or a vapor deposition method. The metal thin film may be herein a single layer or a multilayer where different metal thin films are layered. In particular, a multilayer body where metal layers of Ag and ITO are layered alternately is preferable from the viewpoint of the electromagnetic wave shielding property and the transparency.

Though a thickness of the electromagnetic wave shielding layer can be appropriately selected, if necessary, it is preferable for the entire thickness to be 80 $\mu$m to 400$\mu$m. In the case of a metal transparent conductive film where a metal thin film is layered on a transparent resin layer, it is preferable for the thickness of the metal thin film to be 100 nm to 500 nm, taking the conductivity required for the electromagnetic shield into consideration, and it is preferable for the thickness of the transparent resin layer to be 80 $\mu$m to 300 $\mu$m.

Though a material for forming the electromagnetic wave shielding layer can be appropriately selected, examples of the metal used as the material for forming a metal transparent conductive film are metals such as copper, aluminum, nickel, titanium, tungsten, tin, lead, iron, silver and chromium, and alloys of these, for example, stainless steel. Among them, copper, stainless steel and aluminum are preferable. Examples of the resin for the transparent resin layer which is used as the substrate of the metal transparent conductive film are those which are shown as the material for the above transparent resin layer.

A case where a conductive mesh film is used as the electromagnetic wave shielding layer will be described in the following. The mesh may include a lattice form, honeycomb form and the like and is not particularly limited. Known methods can be used as the method for forming a conductive mesh layer on a transparent resin layer or the like. Examples are: 1) a method for printing a pattern of a conductive ink on a transparent resin layer in accordance with a known printing method such as screen printing or gravure printing; 2) a method for pasting a cloth made of conductive fibers to a transparent resin layer by way of an adhesive or a glue; 3) a method for patterning a metal foil made of copper, aluminum or nickel after being pasted to a transparent resin layer by way of an adhesive or a glue; and 4) a method for patterning a metal thin film made of copper, aluminum or nickel after being formed on a transparent resin layer in accordance with any of the various types of known methods for forming a thin film, such as vapor deposition, sputtering and electroless plating, and the invention is not particularly limited to these. As for the method for patterning in above 3) and 4), a photolithographic method can be cited as an example. Concretely, a photosensitive resist is applied onto a metal foil or a metal thin film, or a photosensitive resist film is laminated, and then, a pattern mask is made to be contact with the metal foil or the metal thin film, which is then exposed to light and developed with a developer to form a resist pattern, and furthermore, the metal in the portion except the patterned portion is made to elude in an appropriate etchant so that a desired conductive mesh film can be formed.

It is preferable for the thickness of the mesh layer in the conductive mesh film to be approximately 0.5 $\mu$m to 20 $\mu$m, and the thickness of the layer is determined depending on the required electromagnetic wave shielding performance, that is, the conductivity, the required opening ratio and the method for forming the conductive mesh layer. As described above, the conductivity required for the electromagnetic wave shield of the PDPs is 3 $\Omega/\square$ or less in the surface resistance, preferably 1 $\Omega/\square$ or less, and more preferably 0.5 $\Omega/\square$ or less. If the thickness of the mesh layer is too small, the conductivity is insufficient, while if it is too great, the cost increases, and therefore, 5 $\mu$m to 15 $\mu$m is preferable.

The narrower the width of the lines is and the wider the pitch is in the pattern of the mesh layer, the higher the opening ratio and the transmittance are, and in addition, the more difficult for an interference pattern to be created due to the interaction between the pattern of the mesh layer and the pigments on the display, which is preferable. However, when the opening ratio is too high, the conductivity of the mesh layer becomes insufficient, and therefore, a width of lines of 5 $\mu$m to 20 $\mu$m and a pitch of 150 $\mu$m to 400 $\mu$m are preferable for use. Furthermore, as for the mesh pattern, it is preferable for the lines in the mesh pattern, for example, in the case of a lattice pattern, to have a certain angle (bias angle) relative to the lines along which pixels are aligned so that no interference pattern is created due to the interaction between the pixels aligned in a matrix on the display. The bias angle, which can prevent an interference pattern, is different depending on the pitch of the pixels, the pitch in the mesh pattern and the width of the lines.

In a case where the mesh layer is made of a metal such as copper, aluminum or nickel, it is preferable for a layer containing a black pigment or a black dye or a black layer made of chromium or the like to be provided on the surface of the mesh layer and/or in the interface between the mesh layer and the transparent resin layer. As a result, reflections from the metal can be prevented so that a display filter having excellent contrast and visibility can be obtained.

It is not necessary for the mesh layer to have a meshed pattern in the portion, except the portion which transmits light when installed on the display, that is, in the portion which is not a display portion and the portion which is hidden by the printed frame. These portions may be a solid layer of a metal foil, for example. In addition, if these solid portions are black, they can be used as the printed frame of the display filter as they are, which is preferable.

Though the electromagnetic wave shielding layer may be formed on the side close to the panel of the display filter or on the side close to the viewer, it is preferable for the electromagnetic wave shield layer to be formed on the side close to the panel because the reflectance is often high. In addition, a mode where a color tone collecting layer for lowering the transmittance and a near infrared ray shielding layer are provided on the viewer side of the electromagnetic wave shield layer is preferable because light reflected from the electromagnetic wave shielding layer can be reduced.

(Interlayer Adhesive Layer)

An interlayer adhesive layer having adhesiveness may be used to paste the various functional layers described above. The adhesive used is not particularly limited, as long as it can paste two objects together through its adhesive function, and adhesives made of a rubber based resin, an acryl based resin or a polyvinyl ether based resin can be used.

Adhesives can be roughly divided into two categories: solvent type adhesives and non-solvent type adhesives. Solvent type adhesives which easily dry and have excellent productivity and processability are still mainly used, but in recent years, non-solvent type adhesives have been coming into use more and more, for reasons of public pollution, energy conservation, resource conservation and safety. Among them, it is preferable to use an active ray curable adhesive having excellent properties in terms of the flexibility, adhesion and resistance to chemicals, which can be cured in seconds through irradiation with active rays.

Concrete examples of active ray curable acryl based adhesives can be found in "Adhesives Data Book," edited by the Adhesion Society of Japan, published by Nikkan Kogyo Shimbun, Ltd. , 1990, pp. 83-88, but the invention is not limited to these. Examples of commercially available multifunctional acryl based ultraviolet ray curable paint products which can be used are XY series (trade name) (registered trademark) by Hitachi Kasei Polymer Co., Ltd., Hi-lock series (trade name) (registered trademark) by Toho Kasei Kogyo Co., Ltd., ThreeBond series (trade name) (registered trademark) by ThreeBond Co., Ltd., Arontite series (trade name) (registered trademark) by Toagosei Chemical Industries Co. , Ltd. , and Cemelock Super series (trade name) (registered trademark) by Cemedine Co., Ltd..

EXAMPLES

A method for evaluating the display filter will be described below.

1) Index of reflection outline clarity (Cr) and index of reflection luminance (Lr)

The method for finding the index of reflection outline clarity (Cr) and the index of reflection luminance (Lr) is described with reference to Figs. 1 to 3. Samples 1 of the PDP filter prepared in the respective examples and comparative examples were mounted on a PDP television (TH-42PX500, manufactured by Matsushita Electric Industrial Co., Ltd.) with the surface on the side opposite to the top surface layer on the viewer side faces the PDP panel 10. The distance between the PDP panel 10 and the top surface layer of the PDP filter sample 1 on the viewer side was 5 mm to 10 mm. A fluorescent lighting apparatus (NFH8 (fluorescent lamp: 10W FHL10EX-N, 8 mm fluorescent lamp) manufactured by Matsushita Electric Works, Ltd. was used to irradiate an acryl plate 3 (Sumipex 960, cast plate (black), 33 mm $\times$ 55 mm, manufactured by Sumitomo Chemical Co., Ltd.) with an image of a fluorescent light 4. The PDP filter sample 1 reflected the acryl plate 3 reflecting the image of the fluorescent light 4. The image 6 of the entirety of the acryl plate 3 reflected in the center portion of the PDP filter sample 1 (hereinafter referred to as reflected image) was taken by a camera 2 (Cosmicar Television Lens, 12.5 mm, 1 : 1.4 Model XC-HR70) of 640 $\times$ 480 pixels, manufactured by Sony Co., Ltd. The pint of the camera 2 was focused on the reflected image 6. At this time, the positional relationship between the acryl plate 3, the PDP sample 1 and the camera 2 were as shown in Figs. 1 and 2. The white arrows in Figs. 1 and 2 show that the acryl plate 3 reflected the fluorescent light 4 and the PDP filter sample 1 reflected the acryl plate 3 (reflected image 6), and the camera took the reflected image 6. The longitudinal direction of the fluorescent lamp, the short side of the acryl plate (33 mm side) and the long side of the PDP filter sample were all parallel to each other (direction referred to as horizontal direction). In addition, the center of the fluorescent light 4 in the longitudinal direction, the center of the short side of the acryl plate 3, the center of the PDP filter sample 1 and the center of the area taken by the camera 2 were in a plane perpendicular to the horizontal direction (see Fig. 1) . Furthermore, the position of the fluorescent lamp was adjusted so that the center line of the image of the fluorescent lamp in the reflected image 6 passed through the center of the area taken by the camera. The image was taken in a dark room and the power of the PDP panel in the PDP television turned off, so that there was no image. The dark room was an environment where the illumination was 0.1 lux or less.

The obtained reflected image was inputted into an image taking board Meteor II Multichannel (Matrox Electronic Systems Ltd.). The image obtained through the input into the board was analyzed, and the reflection luminance curve shown in Fig. 3 was obtained. In Fig. 3, the longitudinal axis indicates the size of the luminance of each pixel and the lateral axis indicates the pixel number. In the image analysis, first, the reflected image was taken into a personal computer by using imaging software (Matrox Intellicam for Windows, Ver. 2.06 (Matrox Electronic Systems Ltd.)), and next, data on the luminance along the center line in the width direction of the fluorescent lamp image in the reflected image was taken using image analyzing software (Matrox Inspector 3.1 (Matrox Electronic Systems Ltd. ) ) (see Fig. 1) . The area of the image analyzed using image analyzing software was set such that the entire image of the fluorescent lamp was included in the area where the image was analyzed, and the center of the area where the image was analyzed and the center of the image of the fluorescent lamp in the longitudinal direction coincide. The 5 point moving average was taken for the luminance data and a luminance curve was obtained.

In the concrete examples described below, the luminance of the first pixel in the luminance curve is $L_1$, the luminance of the second pixel is $L_2$ ... the luminance of the Nth pixel is $L_N$. Here, N is the maximum value of the pixel number in the luminance curve, and an even number. The difference of luminance between adjacent pixels is $dL_1 = L_1 - L_2$, $dL_2 = L_2 - L_3$ ... $dL_{N^-1} = L_{N^-1} - L_N$.

The average value of the luminance values of 10 pixels in the center of the luminance curve in the direction of the pixels is the index of reflection luminance (Lr). Concretely, the average value of $L_{(N/2)^-4}$ to $L_{(N/2)+5}$ is the index of reflection luminance (Lr).

The average of the maximum inclination value of the change in the luminance in the outline portion is the index of reflection outline clarity (Cr). The maximum inclination value is obtained by calculating the difference of luminance between adjacent pixels in advance and the absolute value of the difference of luminance between adjacent pixels is an absolute value of the sum of the difference of luminance for five adjacent pixels with the pixel having the greatest inclination at the center. The average value of the maximum inclination value is the average value of the maximum inclination value in the rising portion in the luminance curve and the maximum inclination value in the dropping portion. Concretely, when that the absolute value is maximum of $dL_1$ to $dL_{N/2}$ is $dL_i$ and that the absolute value is maximum of $dL_{(N/2)+1}$ to $dL_N$ is $dL_j$, the value of $(|dL_{i-2} + dL_{i-1} + dL_i + dL_{i+1} + dL_{i+2}| + | dL_{j-2} + dL_{j-1} + dL_j + dL_{j+1} + dL_{j+2}|) /2$ is the index of reflection outline clarity (Cr).

Prior to the measurement of the luminance distribution for the PDP filter samples, a reference sample (reference surface having gloss on mirror surface in accordance with JIS Z8741 (refractive index: 1.51, gloss for incidence angle of 60 degree: 91.5, visual reflectance: 4.1 %) was used instead of a PDP filter sample, and the exposure of the camera is adjusted so that the maximum luminance in the luminance curve for the reflected image is 220. At this time, the luminance curve becomes approximately rectangular, and the position of the fluorescent lighting apparatus is finely adjusted, so that the value of the luminance in the top portion uniformly becomes 220 (the obtained image was 8 bit (250 gradations)).

2) Index of image clarity (Ct)

How to find the index of image clarity (Ct) is described below with reference to Figs. 4 to 6. The PDP filter samples 1 prepared in the respective examples and comparative examples were mounted on a PDP television (TH-42PX500, manufactured by Matsushita Electronic Industries Co., Ltd.) with the surface on the side opposite to the top surface layer on the viewer side facing the PDP panel 10. The distance between the PDP panel 10 and the top surface layer of the PDP filter sample 1 on the viewer side was 5 mm to 10 mm. The center portion of the PDP panel 10 of the PDP television displays the pattern image 11 shown in Fig. 4 (black pattern against white background, size: 5 mm $\times$ 100 mm). The entirety of this pattern image 11 that transmitted through the PDP filter sample 1 (hereinafter referred to as transmitted pattern image) was taken by a camera 2 (Cosmicar Television Lens, 12.5 mm, 1 : 1.4 (Model XC-HR70), manufactured by Sony Co., Ltd.). The pint of the camera 2 was focused on the PDP panel 10. The camera 2 was set right in front of the pattern image 11 (see Figs. 4 and 5). The white arrows in Figs. 4 and 5 show how the pattern image that transmitted through the PDP filter sample 1 (transmission pattern image) was taken by the camera 2.

The obtained transmission pattern image was inputted into an image taking board Meteor II Multichannel (Matrox Electronic Systems Ltd.). The image obtained through the input into the board was analyzed, and the transmission image luminance curve shown in Fig. 6 was obtained. In Fig. 6, the longitudinal axis indicates the luminance of each pixel and the lateral axis indicates the pixel number. In the image analysis, first, the reflected image was taken into a personal computer by using imaging software (Matrox Intellicam for Windows, Ver. 2.06 (Matrox Electronic Systems Ltd.)), and data on the luminance along the straight line connecting the center point of the long side of the transmission pattern image was obtained using image analyzing software (Matrox Inspector 3.1 (Matrox Electronic Systems Ltd.)) (see Fig. 4).

The area where the image was analyzed using image analyzing software was set such that first the entirety of the transmission pattern image was included in the area where the image was analyzed, and the center of the area where the image was analyzed and the center of the transmission pattern image coincided, and the luminance curve shown in Fig. 6 was obtained from this luminance data. Next, the center of the area where the image was analyzed was moved by +/- 5 pixels (in direction of short side of transmission pattern image) from the center point of the transmission pattern image, so that the average luminance value in the edge portion of the transmission pattern image in Fig. 6 became maximum. The luminance in the edge portion of the transmission pattern image is herein that of the pixel of which the luminance in a portion corresponding to the edge portion on both sides of the transmission pattern image is maximum in the luminance curve. The average value of luminance value in the edge portion of the transmission pattern image is herein the average value of the luminance value in the edge portion on both sides in the luminance curve. Finally, the luminance curve where the average value of the luminance value in the edge portion of the transmission pattern image is maximum is standardized so that the difference between the maximum luminance and the minimum luminance becomes 100, and thus, the standardized luminance curve was obtained.

In the concrete examples described below, the luminance of the first pixel in the standardized luminance curve is $L_1$, the luminance of the second pixel is $L_2$ ... the luminance of the Nth pixel is $L_N$. Here, N is the maximum value of the pixel number in the standardized luminance curve, and en even number. The difference of luminance between adjacent pixels is $dL_1 = L_1 - L_2$, $dL_2 = L_2 - L_3$ ... $dL_{N-1} = L_{N-1} - L_N$.

The average maximum inclination value of the change in luminance in the outline portion of the standardized luminance curve is the index of reflected image clarity (Ct). The minimum luminance is the average luminance value of ten pixels at the center of the standardized luminance curve in the direction of the pixels. Concretely, the average value of $L_{(N/2)-4}$ to $L_{(N/2)+5}$ is the minimum luminance. The maximum inclination value is obtained by calculating the amount of change in luminance per pixel in advance and the absolute value of the amount of change in luminance per pixel is an absolute value of the sum of the amount of change in luminance of five pixels with the pixel having the greatest inclination at the center. The average maximum inclination value is the average value of the maximum inclination value in the rising portion in the standardized luminance curve and the maximum inclination value in the dropping portion. Concretely, when that the absolute value is maximum from $dL_1$ to $dL_{N/2}$ is $dLi$ and that the absolute value is maximum from $dL_{(N/2)+1}$ to $dL_{N1}$ is $dLj$, the value of $(|dL_{i-2} + dL_{i-1} + dL_i + dL_{i+1} + dL_{i+2}| + |dL_{j-2} + dL_{j-1} + dL_j + dL_{j+1} + dL_{j+2}|)$ /2 is the index of reflected image clarity (Ct).

Prior to the measurement of the distribution in the luminance of the PDP samples, a reference sample (reference surface having gloss on mirror surface in accordance with JIS Z8741 (refractive index: 1.51, gloss for incidence angle of 60 degree: 91.5, visual reflectance: 4.1 %) was used instead of a PDP filter sample, and the exposure of the camera was adjusted so that the maximum luminance was 80 (the obtained image was 8 bit (256 gradations)) in accordance with the method for finding the maximum luminance in the luminance curve of the reflected image in 1).

3) Length of ripples and width of ripples

The PDP filter samples prepared in the respective examples and comparative examples were observed through an optical microscope (microscope for inspection and research DMLB HC, manufactured by Leica Microsystems Co., Ltd., transmission mode, optical magnification: 50 times), and a digital image of 1300 × 1030 pixels was taken using a digital camera. In order to provide contrast in the ripple structure, the position of the condenser of the optical microscope was set to the lowest. The obtained photograph image was printed out in A4 size, and the length of the long axis and the length of the short axis were each measured for all the ripple structures in an area of 200 μm × 200 μm (real dimensions of sample). The borders in the ripple structure were identified from the contrast in the image. The filter sample of 0.5 m$^2$ was divided into five, and the center portion in each sample piece was evaluated using the above method, and thus the average value of the long axis and the short axis was found for all ripple structures in the evaluated area. The long axis is defined as the length of the ripples, and the short axis is defined as the width of the ripples. In a case where the ripple structure is difficult to observe or difficult to cut when pasted to glass due to the multilayer structure of the filter, the layer where the ripple structure is formed can be removed and used for evaluation.

4) Density of ripples

An image process was carried out on the photograph taken in 3) using Image-Pro Plus, Ver. 4.0 (manufactured by Planetron Co., Ltd. ), and the ratio of the total area occupied by the area of the ripple structure within an angular field of view of 200 μm × 200 μm was the density of the ripples. Concretely, the ripple portion in the area of objects in the photograph of the ripple structure was drawn over with a Magic Marker, and the obtained photograph was put into a scanner, and ripple portions and non-ripple portions were converted into binary, a pseudo-color areas (pseudo-color area ratio) process was carried out to calculate the area ratio, and the ratio of the entire area of the object occupied by the area of the ripple portion was the density of the ripples. A filter of 0.5 m$^2$ was divided into five and the center portion of each sample piece was evaluated in accordance with the above method, and the average value of the density in the evaluated area was determined. In a case where the ripple structure is difficult to observe or difficult to cut when a film having a ripple structure is pasted to glass due to the multilayer structure of the filter, the layer where the ripple structure is formed can be removed and used for evaluation.

5) Height of ripples

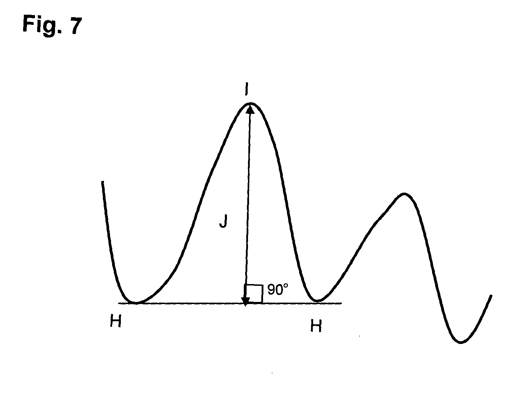

The PDP filter samples prepared in the respective examples and comparative examples were placed on a smooth metal plate and cut with a blade at an inclination of 30 degree relative to the direction of progress by using one blade of a Feather razor S. In a case where there is a ripple structure between the hard coat layer and the transparent resin layer, the blade makes contact from the upper surface of the hard coat layer. In a case where a film having a ripple structure is pasted to glass, the film having a ripple structure may be removed from the glass for evaluation. Next, the cut surface was observed through an optical microscope (microscope for inspection and research DMLB HC, manufactured by Leica Microsystems Co. , Ltd. , reflection mode, with differential interference filter, optical magnification: 1000 times), and a digital image of 1300 × 1030 pixels was taken using a digital camera. The obtained picture image was expanded five times in the direction of the thickness of the cross section and printed out in A4 size. The height of the ripples was calculated from the minimum distance between a straight line connecting adjacent minimum points in the curve of the form of the ripple structure and the maximum point (see Fig. 7). This was measured for all protrusions observed within the angular field of view, and the average value was determined and the real size calculated from the magnification ratio, and the height of the protrusions was obtained. The curve of the form of the interface ripple structure was identified from the color contrast in the cross section.

6) Measurement of refractive index

The material application agent for the layer to be measured was applied to a silicon wafer with a spin coater so that the film thickness became 0.1 μm upon drying. Next, the material was heated and cured for one minute at 130°C with an inert oven INH-21CD (manufactured by Koyo Thermo System Co., Ltd.) (conditions for curing a low refractive index layer) , and thus, a coating film was obtained. The refractive index of the formed coating film was measured at a wavelength of 633 nm using a phase difference measuring apparatus (NPDM-1000, manufactured by Nikon Corporation).

7) Measurement of thickness of multilayer

The cross sections of the PDP filter samples prepared in the respective examples and comparative examples were observed with an acceleration voltage of 100 kV with a transmission type electron microscope (H-7100FA, manufactured by Hitachi Ltd.). Filters using a glass substrate were evaluated when removed from the glass. The samples were prepared in accordance with an ultrathin cut piece method. They were observed with a magnification of 100,000 times or 200,000 times, and the thickness of the respective layers was measured.

8) Visual reflectance and visual transmittance

The transmittance of the PDP filter samples prepared in the respective examples and comparative examples for light entering from the observer side in a wavelength range of 300 nm to 1300 nm was measured with a spectrometer (UV3150PC, manufactured by Shimadzu Corporation), and the visual transmission of light in a wavelength region of visible light (380 nm to 780 nm) was determined. In addition, the reflectance of light beams from one surface for light in a wavelength range of 380 nm to 780 nm entering at an angle of 5 degree relative to the measurement surface was calculated as the visual reflectance, as described below.
The surface which was not measured was uniformly roughened using waterproof sandpaper No. 320 to 400 so that the gloss at 60°C became 10 or less (JIS Z 8741) , in order to prevent effects of reflection from the side of the PDP sample which was not measured, and thereafter, black paint was applied, so that the transmittance of visible light became 5 % or less. Thereafter, the spectral factor of the sample was measured with a spectrometer, and the reflectance of light from one surface for light in a wavelength range of 380 nm to 700 nm was calculated in accordance with JIS Z8701-1999. The formula used for calculation was as follows.

$$T = K \cdot \int S(\lambda) \cdot y(\lambda) \cdot R(\lambda) \cdot d\lambda$$

(wherein, the section for integration was 380 nm to 780 nm)
T: reflectance of light beams from one surface
S($\lambda$): distribution in reference light used for color display
y($\lambda$): color matching function in XYZ display system
R($\lambda$): spectral reflectance factor

9) Haze

The haze of the PDP filter samples prepared in the respective examples and comparative examples was measured using a directly readable haze computer manufactured by Nippon Denshoku Industries Co., Ltd. (NDH 2000). The haze in the direction of the thickness of the samples was found as the average value of ten-point measurement. A D65 light source was used as the light source.

10) Evaluation of PDP with the eye

The PDP filter samples prepared in the respective examples and comparative examples were mounted on a PDP television (TH-42PX-500, manufactured by Matsushita Electric Industrial Co., Ltd.), and the reflection property and image clarity were evaluated with the eye.

11) Evaluation of interference fringe

In order to prevent the effects of reflection from the rear surface, the rear surface of the surface measured (surface on hard coat layer side) was roughened using sandpaper No. 240 while the visible reflectance was measured in 8) , and thereafter, the samples which were drawn over with a Magic Marker (registered trademark) were placed 30 cm beneath a fluorescent light with three wavelengths (National Pa-look 3-Wavelength Daylight Color (F.L 15EX-N 15W)) in a dark room and evaluated by checking whether or not the iris pattern could be perceived when the sample was viewed with the eye while changing the viewpoint.
No iris pattern visible: A
Very faint iris pattern visible: B
Iris pattern visible: C
The present invention is concretely described below using examples, but the present invention is not limited to any of the examples.

1. Adjustment of paint with low refractive index

(Paint A)

95.2 mass parts of methyl trimethoxysilane and 65.4 mass parts of trifluoropropyl trimethoxysilane were dissolved in 300 mass parts of propylene glycol monomethyl ether and 100 mass parts of isopropanol. 297.9 mass parts of hollow silica fine particles dispersing liquid having an average particle diameter of 50 nm (isopropanol dispersing type, solid concentration: 20.5 %, produced by Catalysts & Chemicals Industries Co. , Ltd.), 54 mass parts of water and 1.8 mass parts of formic acid were dripped into this solution while stirring, and the reaction temperature was prevented from exceeding 30°C. After the dripping, the obtained solution was heated for two hours in a bath of 40°C. The solution was then heated for two hours in a bath of 85°C, the internal temperature was raised to 80°C and the solution was heated for 1.5 hours, and then cooled to room temperature, and thus, a polymer solution A was obtained.

An aluminum based curing agent where 4.8 mass parts of aluminum tris(acetyl acetate) (trade name: Aluminum Chelate A (W), made by Kawaken Fine Chemicals Co., Ltd.) was dissolved in 125 mass parts of methanol was added to the obtained polymer solution A, and furthermore, 1500 mass parts of isopropanol and 250 mass parts of propylene glycol monomethyl ether were added, and the mixture was mixed for two hours at room temperature, and thus, a paint with a low refractive index A was prepared.

A coating film of the paint with a low refractive index A was formed on a silicon waver, and the refractive index was determined to be 1.36 in accordance with the above described method.

(Paint B)

95.2 mass parts of methyl trimethoxysilane and 65.4 mass parts of trifluoropropyl trimethoxysilane were dissolved in 300 mass parts of propylene glycol monomethyl ether and 100 mass parts of isopropanol. 54 mass parts of water and 1.8 mass parts of formic acid were dripped into this solution while stirring, and the temperature for reaction was prevented from exceeding 30°C. After the dripping, the obtained solution was heated for two hours in a bath of 40°C. Thereafter, the solution was heated for two hours in a bath of 85°C, the internal temperature was raised to 80°C, and the solution was heated for 1.5 hours and then cooled to room temperature, and thus, a polymer solution was obtained.

An aluminum based curing agent where 4.8 mass parts of aluminum tris(acetyl acetate) (trade name: Aluminum Chelate A (W), produced by Kawaken Fine Chemicals Co., Ltd. ) was dissolved in 125 mass parts of methanol was added to the obtained polymer solution, and furthermore, 1500 mass parts of isopropanol and 250 mass parts of propylene glycol monomethyl ether were added, and the mixture was mixed for two hours at room temperature, and thus, a paint with a low refractive index B was prepared.

A coating film of the paint with a low refractive index B was formed on a silicon waver, and the refractive index was determined to be 1.41 in accordance with the above method.

2. Preparation of paint containing coloring material

(Paint-1)

14.5 mass parts of KAYASORB (registered trademark) IRG-050, produced by Nippon Kayaku Co., Ltd., and 8 mass parts of EX Color (registered trademark) IR-10A, produced by Nippon Shokubai Co., Ltd., being near infrared ray absorbing coloring matters, as well as 2.9 mass parts of TAP-2, produced by Yamada Chemical Co., Ltd., being an organic coloring material having a main absorption peak of 593 nm, were mixed into 2000 mass parts of methyl ethyl ketone and dissolved while stirring. This solution was mixed into 2000 mass parts of Hals-hybrid (registered trademark) IR-G205 (solution having solid concentration of 29 %), produced by Nippon Shokubai Co., Ltd., being a transparent polymer resin binder solution, while stirring, so that a paint-1 was prepared.

3. Preparation of hard coat film

(HC Paint 1)

70 weight parts of a mixture of dipentaerythritol hexaacrylate and dipentaerythritol pentaacrylate (KAYARAD (registered trademark)-DPHA, produced by Nippon Kayaku Co., Ltd.), 25 weight parts of trimethylol propane ethylene oxide modified triacrylate (M-350, produced by Toagosei Chemical Industries Co., Ltd.), 5 weight parts of completely alkyled melamine (Cymel (registered trademark) C303, produced by Nihon Cytec Industries Ltd.), and 1 weight part of a phosphate based catalyst (catalyst 296-9, produced by Nihon Cytec Industries Ltd.), were mixed together, so that an application composition (HC Paint-1) was obtained. A coating film of HC Paint-1 was formed on a silicon wafer and heated for one minute at 230°C so as to be cured, and thereafter, the refractive index was determined to be 1.52 in accordance with the above method.

(HC 1 to 6, HC 8 to 10)

Chips of polyethylene terephthalate (hereinafter referred to as PET) not including a filler (limiting viscosity: 0.63 dl/g) were sufficiently dried in a vacuum for 3 hours at 180°C, and then supplied to an extruder. The PET chips were melted at 285°C and thereafter extruded into a sheet through a mouthpiece in T shape, and the sheet was wound around a cast drum with a mirror surface having a surface temperature of 25°C in accordance with a static electricity applying casting method so as to be cooled and solidified, and thus, an unexpanded sheet was obtained. The thus obtained unexpanded sheet was expanded to 3.5 times in its longitudinal direction with a group of rolls heated to 95°C, and thus, a uniaxially expanded film was obtained. The above HC Paint 1 was applied on one surface of the uniaxially expanded film in accordance with a die coating method. Both ends of the film to which the HC Paint 1 was applied were gripped with clips while the film was introduced into a preheating zone of 80°C to 100°C, and subsequently expanded to 3.0 to 4.0 times in its width direction in a heating zone of 90°C to 100°C. Furthermore, a continuous relaxation process was carried out, so that the film shrank by 5 % in the width direction, while heat treatment was carried out for 17 seconds in a heat treatment zone of 230°C, so that the applied film was cured and thermally set, and thus, a hard coat film having a total thickness of 125 $\mu$m, a thickness of 10 $\mu$m in the hard coat layer, an index of refraction of 1.52 in the hard coat layer and an index of refraction of 1.64 in the PET base was obtained. A ripple structure was formed in the interface between the hard coat layer and the PET layer in the obtained hard coat film. The conditions for film formation for obtaining the hard coat films HC 1 to 6 and HC 8 to 10, as well as the data on the ripple structure in the interface between the hard coat layer and the PET layer in the obtained hard coat films, are shown in Table 1.

(HC 7)

A paint obtained by diluting a commercially available hard coat agent (DeSolite (registered trademark) Z7528, produced by JSR Corporation) with isopropyl alcohol so that the solid concentration was 30 % was applied to the adhesive surface of an optical polyester film (Lumirror (registered trademark) U46, produced by Toray Industries Inc., thickness: 100 $\mu$m) with a microgravure coater. The hard coat agent was irradiated with ultraviolet rays of 1. 0 J/cm$^2$ so as to be cured after being dried for one minute at 80°C, and thus, a hard coat film HC 7 on which a hard coat layer having a thickness of 5 $\mu$m was formed was prepared.

4. Preparation of anti-reflection layer

(AR1)

A commercially available antistatic paint with a high refractive index (Opstar (registered trademark) TU4005, produced by JSR Corporation) was diluted with isopropyl alcohol so that the solid concentration became 8 %, and thereafter, the surface of a hard coat film where a hard coat layer was formed was coated with a microgravure coater. The antistatic paint with a high refractive index was irradiated with ultraviolet rays of 1.0 J/cm$^2$ so as to be hardened after being dried for one minute at 120°C, and thus, a high refractive index layer with a refractive index of 1.65 and a thickness of 135 nm was formed on the hard coat layer.

Next, the above paint having a low refractive index A was applied on the above surface where a high refractive index layer was formed with a microgravure coater. Then, the paint was dried and cured for one minute at 130°C, so that a low refractive index layer with a refractive index of 1.36 and a thickness of 90 nm was formed on the high refractive index layer, and thus, an anti-reflection film was fabricated (the anti-reflection layer made up of the high refractive index layer and low refractive index later is referred to as AR1).

(AR2)

An anti-reflection layer was provided on a hard coat film in the same manner as with AR1, except that the paint having a low refractive index B was used as the paint having a low refractive index (this anti-reflection layer is referred to as AR2).

5. Preparation of infrared ray shielding layer

(NIR1)

Sunytect (registered trademark) , produced by Sun A Kaken Co., Ltd. (thickness: 50 μm), being a protective film, was pasted on the surface of an anti-reflection film on which an anti-reflection layer was formed. Furthermore, a paint-1 containing an organic coloring material was applied on the surface of a substrate film on the side opposite to the anti-reflection layer with a die coater and dried at 120°C, so that an infrared ray shielding layer having a thickness of 10 μm was formed, and thus, an anti-reflection/infrared ray shielding film was prepared (this infrared ray shielding layer is referred to as NIR1).

(NIR2)

Paint-1 containing an organic coloring material was applied on the adhesive surface of an optical polyester film (Lumirror (registered trademark) U46, produced by Toray Industries Inc., thickness: 100 μm) with a die coater and dried at 120°C, so that an infrared ray shielding layer having a thickness of 10 μm was formed, and thus, an infrared ray shielding film was prepared (this infrared ray shielding film is referred to as NIR2).

6. Preparation of color correcting layer

(Color correcting layer 1)

An organic color correction coloring material was mixed into an acryl based transparent adhesive. The added amount of coloring material for each standard was adjusted to that the visual transmittance of the final filter became 30 %.

(Color correcting layer 2)

An organic color correction coloring material was mixed into an acryl based transparent adhesive. The added amount of coloring material for each standard was adjusted to that the visual transmittance of the final filter became 40 %.

7. Electromagnetic wave shielding layer

(EMI1)

A copper foil having a thickness of 10 μm where a blackening process was carried out on the two surfaces was pasted to the adhesive surface of an optical polyester film (Lumirror (registered trademark) U46, produced by Toray Industries Inc., thickness: 100 μm) by way of an adhesive. The copper foil was patterned to a lattice form with a line width of 10 μm, a pitch of 300 μm and a bias angle of 40 degree and the peripheral portion remaining, in accordance with a photolithographic method, so that a conductive mesh layer was formed. A transparent acryl based resin layer having a thickness of 20 μm was layered on top of the obtained mesh portions other than the periphery portion, and thus, an electromagnetic wave shielding film (EMI1) was prepared.

8. Preparation of light diffusion layer

(Light diffusion 1)

Polyethylene terephthalate chips (limiting viscosity 0.63 dl/g) not including a filler were sufficiently dried in a vacuum for three hours at 180°C, then melted in an extruder at 285°C, and then extruded into a sheet through a mouthpiece in T shape, and the sheet was cast onto a cast drum at 25°C while static electricity was applied, so that an unexpanded sheet was obtained. The obtained unexpanded sheet was preheated to 80°C and expanded to 3.5 times in its longitudinal direction through roll expansion at 90°C. Thereafter, both ends were gripped with clips while the sheet was led to a preheating zone at 90°C and subsequently expanded to 3.3 times in its width direction in a heating zone of 100°C. Furthermore, a relaxation process was continuously carried out so that the sheet shrank by 5% in the width while heat treatment was carried out for 17 seconds in a heat treatment zone of 230°C, and thus, a polyester film having a thickness of 120 μm was obtained. This film was passed between a roll provided with a mold heated to 150°C (average surface coarseness along center line Ra: 3.0 μm) and a back roll, and the roll provided with the mold was pressed against the film with a line pressure of 100 N/cm, so that a ripple structure was formed on one surface of the film. The width of the ripple structure was 40 μm, the height was 2.0 μm, and the density of the ripples was 90 %.

(Light diffusion 2)

A film having a ripple structure on the surface was obtained in the same manner as in (light diffusion 1), except that the average surface coarseness along the center line Ra of the mold roll was 5. 0 μm. The width of the ripple structure was 40 μm, the height was 2.7 μm, and the density of ripples was 90 %.

(Light diffusion 3)

A polyethylene terephthalate film produced by Toray Industries Inc. (trade name: T60, thickness: 125 μm) was used. The haze value was 2.0 %.

Example 1

An anti-reflection layer (AR1) was layered on the hard coat surface of the above hard coat film (HC1) as described above, and an anti-reflection film was thus obtained. An infrared ray shielding layer (NIR1) was layered on the surface opposite to the anti-reflection surface of the obtained anti-reflection film in accordance with the above method, and thus, an anti-reflection film was prepared. The obtained anti-reflection/infrared ray shielding film was pasted to a glass substrate by using the above color correcting color material containing adhesive (color correcting layer 1), and thereafter, an autoclave process was carried out (pressure: 0.5 MPa, temperature: 70°C, time for processing: 1 hour). Next, the above electromagnetic wave shielding film (EMI1) was pasted on the opposite surface of the glass substrate (surface where anti-reflection/infrared ray shielding film was not pasted) by using an acryl based transparent adhesive, so that the substrate surface became the glass side, and thereafter, an autoclave process was carried out (pressure: 0.5 MPa, temperature: 70°C, time for processing: 1 hour) , and thus, a PDP filter having the configuration shown in Table 2 was prepared.

The characteristics of the prepared PDP filter are shown in Table 3. The visual reflectance was 0.9, the haze was 6.0 %, the visual transmittance was 30 %, the index of reflection outline clarity (Cr) was 25, the index of reflection luminance (Lr) was 70, and the index of image clarity (Ct) was 70, and thus, there was little reflection when the filter was mounted on a PDP television as evaluated with the eye, and the transmitted image was extremely clear.

Examples 2 to 9

PDP filters were prepared in the same manner as in Example 1, except that the respective layers in the structure used in the PDP filter were changed as shown in Table 2. The characteristics of the prepared PDP filters are shown in Table 3. In all of the filters, the index of reflection outline clarity (Cr), the index of reflection luminance (Lr) and the index of image clarity (Ct) had values within the range required according to the present invention, and thus, there was little reflection when the filter was mounted on a PDP television as evaluated with the eye, and the transmitted image was extremely clear.

Examples 10 and 11

PDP filters were prepared in the same manner as in Example 1, except that the respective layers in the structure used in the PDP filter were changed as shown in Table 2. In Example 10, HC7 on which AR1 was layered was pasted on the surface of the obtained filter to which the electromagnetic wave shielding layer was pasted by using an acryl based transparent adhesive so that the anti-reflection surface faced outward, and in Example 11, HC5 on which AR1 was layered was pasted on the surface of the obtained filter to which the electromagnetic wave shielding layer was pasted by using an acryl based transparent adhesive so that the anti-reflection surface faced outward, and thereafter, an autoclave process (pressure: 0.5 MPa, temperature: 70°C, time for processing: 1 hour) was carried out, and thus, PDP filters having the configuration shown in Table 2 were prepared.

The characteristics of the prepared PDP filters are shown in Table 3. In all of the filters, the index of reflection outline clarity (Cr), the index of reflection luminance (Lr) and the index of image clarity (Ct) had values within the range required according to the present invention, and thus, there was little reflection when the filter was mounted on a PDP television as evaluated with the eye, and the transmitted image was extremely clear.

Examples 12 and 13

An anti-reflection layer (AR1) was layered on the hard coat surface of the above hard coat film (HC2) as described above, and thus, an anti-reflection film was obtained. A glass substrate was pasted on the surface opposite to the anti-reflection surface of the obtained film by using an acryl based transparent adhesive, and thereafter, an autoclave process was carried out (pressure: 0.5 MPa, temperature: 70°C, time for processing: 1 hour).

Next, the above infrared ray shielding film NIR2 was pasted on the opposite surface of the glass substrate (surface on which anti-reflection film was not pasted) by using the above color correcting coloring material containing adhesive (color correcting layer 1), so that the substrate surface became the glass side, and thereafter, an autoclave process (pressure: 0.5 MPa, temperature: 70°C, time for processing: 1 hour) was carried out. In Example 12, an electromagnetic wave shielding film (EMI1) was pasted to the obtained film so that the substrate surface became the NIR layer side by using an acryl based transparent adhesive, and thereafter, an autoclave process (pressure: 0.5 MPa, temperature: 70°C, time for processing: 1 hour) was carried out, and thus, a PDP filter having the configuration shown in Table 2 was prepared. HC7 on which Ar1 was layered was pasted to the thus obtained filter on the EMI1 side, and thereafter, an autoclave process (pressure: 0.5 MPa, temperature: 70°C, time for processing: 1 hour) was carried out, and thus, the PDP filter of Example 13 was prepared. The configuration of these filters is shown in Table 2.

The characteristics of the prepared PDP filters are shown in Table 3. In all of the filters, the index of reflection outline clarity (Cr), the index of reflection luminance (Lr) and the index of image clarity (Ct) had values within the range required according to the present invention, and thus, there was little reflection when the filter was mounted on a PDP television as evaluated with the eye, and the transmitted image was extremely clear.

Example 14

An anti-reflection layer (AR1) was layered on the hard coat surface of the above hard coat film (HC2) as described above, and thus, an anti-reflection film was obtained. A glass substrate was pasted on the surface opposite to the anti-reflection surface of the obtained film by using an acryl based transparent adhesive, and thereafter, an autoclave process (pressure: 0.5 MPa, temperature: 70°C, time for processing: 1 hour) was carried out.

Next, an electromagnetic wave shielding film EMI1 was pasted on the opposite surface of the glass substrate (surface on which anti-reflection film was not pasted) by using the above color correcting coloring material containing adhesive (color correcting layer 1), so that the base surface became the glass side, and thereafter, an autoclave process (pressure: 0.5 MPa, temperature: 70°C, time for processing: 1 hour) was carried out. Finally, the above infrared ray shielding film MIR2 was pasted to the obtained film so that the substrate surface became the EMI layer side by using an acryl based transparent adhesive, and thereafter, an autoclave process (pressure: 0.5 MPa, temperature: 70°C, time for processing: 1 hour) was carried out, and thus, a PDP filter having the configuration shown in Table 2 was prepared.

The characteristics of the prepared PDP filters are shown in Table 3. In this filter, the index of reflection outline clarity (Cr), the index of reflection luminance (Lr) and the index of image clarity (Ct) had values within the range required according to the present invention, and thus, there was little reflection when the filter was mounted on a PDP television as evaluated with the eye, and the transmitted image was extremely clear.

Examples 15 to 17

An anti-reflection layer (AR1) was layered on the hard coat surface of the above hard coat film (HC7) as described above, and thus, an anti-reflection film was obtained. An infrared ray shielding layer (NIR1) was layered on the surface opposite to the anti-reflection surface of the obtained anti-reflection film in accordance with the above method, and thus, an anti-reflection/infrared ray shielding film was prepared. The obtained anti-reflection/infrared ray shielding film was pasted to a glass substrate by using the above color correcting coloring material containing adhesive (color correcting layer 2), and thereafter, an autoclave process (pressure: 0.5 MPa, temperature: 70°C, time for processing: 1 hour) was carried out.

Next, the above light diffusion layer was pasted on the opposite surface of the glass substrate (surface on which anti-reflection/infrared ray shielding film was not pasted) by using an acryl based transparent adhesive, and thereafter, an autoclave process (pressure: 0.5 MPa, temperature: 70°C, time for processing: 1 hour) was carried out. In Example 15, (light diffusion 1) was pasted to the obtained film in such a manner that the ripple structure surface became the glass substrate side, in Example 16, (light diffusion 2) was pasted to the obtained film in such a manner that the ripple structure surface became the glass substrate side, and in Example 17, (light diffusion 3) was pasted to the obtained film in such a manner that the ripple structure surface became the glass substrate side.

Finally, an electromagnetic wave shielding film (EMI1) was pasted to the obtained film so that the base surface became the light diffusion layer side by using an acryl based transparent adhesive, and thereafter, an autoclave process (pressure: 0.5 MPa, temperature: 70°C, time for processing: 1 hour) was carried out, and thus, a PDP filter having the configuration shown in Table 2 was prepared.

The characteristics of the prepared PDP filters are shown in Table 3. In all of the filters, the index of reflection outline clarity (Cr), the index of reflection luminance (Lr) and the index of image clarity (Ct) had values within the range required according to the present invention, and thus, there was little reflection when the filter was mounted on a PDP television as evaluated with the eye, and the transmitted image was extremely clear.

Comparative Examples 1 to 5

PDP filters were prepared in the same manner as in Example 1, except that the respective layers in the configuration used in the PDP filter were changed as in Table 2.

The characteristics of the prepared PDP filter are shown in Table 3. In Comparative Examples 1 and 2, there is no light diffusion layer for reducing reflection, and therefore, Cr and Lr had high values, and there was clear reflection. In Comparative Examples 3 and 4, the effects of light diffusion were small, though there was a light diffusion interface having a ripple structure, and Cr and Lr were outside the range of the present invention, and thus, the reflection property were poor. Meanwhile, in Comparative Example 5, the height of the ripples was too great, making the Ct small, and thus, the image clarity was poor.

Table 1

| | Size of ripples | | | | Conditions for manufacture | | |
|---|---|---|---|---|---|---|---|
| | Width | Length | Height | Density | Preheating temperature | Expansion temperature | Degree of lateral expansion |
| Unit | μm | μm | μm | % | °C | °C | Times |
| HC1 | 30 | 50 | 2.5 | 80 | 90 | 100 | 3.2 |
| HC2 | 30 | 50 | 1.5 | 80 | 90 | 100 | 3.3 |
| HC3 | 30 | 50 | 1.0 | 80 | 90 | 100 | 3.4 |
| HC4 | 30 | 50 | 0.5 | 80 | 90 | 100 | 3.6 |
| HC5 | 20 | 40 | 0.2 | 75 | 90 | 100 | 3.8 |
| HC6 | 20 | 50 | 1.5 | 80 | 85 | 100 | 3.4 |
| HC7 | 0 | 0 | 0 | 0 | - | - | - |
| HC8 | 30 | 50 | 0.03 | 80 | 90 | 100 | 4.0 |
| HC9 | 20 | 40 | 1.0 | 45 | 100 | 100 | 3.4 |
| HC10 | 5 | 90 | 4.0 | 90 | 80 | 95 | 3.0 |

Table 2

| | First layer | Second layer | Third layer | Fourth layer | Fifth layer | Sixth layer | Seventh layer | Eighth layer |
|---|---|---|---|---|---|---|---|---|
| Example 1 | AR1 | HC1 | NIR1 | Color correction 1 | Glass | EMI1 | | |
| Example 2 | AR1 | HC2 | NIR1 | Color correction 1 | Glass | EMI1 | | |
| Example 3 | AR1 | HC3 | NIR1 | Color correction 1 | Glass | EMI1 | | |
| Example 4 | AR1 | HC4 | NIR1 | Color correction 1 | Glass | EMI1 | | |
| Example 5 | AR1 | HC5 | NIR1 | Color correction 1 | Glass | EMI1 | | |

(continued)

| | First layer | Second layer | Third layer | Fourth layer | Fifth layer | Sixth layer | Seventh layer | Eighth layer |
|---|---|---|---|---|---|---|---|---|
| Example 6 | AR1 | HC6 | NIR1 | Color correction 1 | Glass | EMI1 | | |
| Example 7 | AR1 | HC2 | NIR1 | Color correction 2 | Glass | EMI1 | | |
| Example 8 | AR1 | HC3 | NIR1 | Color correction 2 | Glass | EMI1 | | |
| Example 9 | AR1 | HC5 | NIR1 | Color correction 2 | Glass | EMI1 | | |
| Example 10 | AR1 | HC5 | NIR1 | Color correction 2 | Glass | EMI1 | HC7 | AR1 |
| Example 11 | AR1 | HC7 | NIR1 | Color correction 2 | Glass | EMI1 | HC5 | AR1 |
| Example 12 | AR1 | HC2 | Glass | Color correction 1 | NIR2 | EMI1 | | |
| Example 13 | AR1 | HC2 | Glass | Color correction 1 | NIR2 | EMI1 | HC7 | AR1 |
| Example 14 | AR1 | HC2 | Glass | Color correction 1 | EMI1 | NIR2 | | |
| Example 15 | AR1 | HC7 | NIR1 | Color correction 2 | Glass | Light diffusion 1 | EMI1 | |
| Example 16 | AR1 | HC7 | NIR1 | Color correction 2 | Glass | Light diffusion 2 | EMI1 | |
| Example 17 | AR1 | HC7 | NIR1 | Color correction 2 | Glass | Light diffusion 3 | EMI1 | |
| Comparative Example 1 | AR1 | HC7 | NIR1 | Color correction 2 | Glass | EMI1 | | |
| Comparative Example 2 | AR2 | HC7 | NIR1 | Color correction 2 | Glass | EMI1 | | |
| Comparative Example 3 | AR1 | HC8 | NIR1 | Color correction 2 | Glass | EMI1 | | |

(continued)

|  | First layer | Second layer | Third layer | Fourth layer | Fifth layer | Sixth layer | Seventh layer | Eighth layer |
|---|---|---|---|---|---|---|---|---|
| Comparative Example 4 | AR1 | HC9 | NIR1 | Color correction 2 | Glass | EMI1 |  |  |
| Comparative Example 5 | AR1 | HC10 | NIR1 | Color correction 2 | Glass | EMI1 |  |  |

Table 3

| | Visual transmittance | Visual reflectance | Haze | Cr | Lr | Ct | Size of ripples | | | | Interference fringe |
|---|---|---|---|---|---|---|---|---|---|---|---|
| | | | | | | | Width | Length | Height | Density | |
| Unit | % | % | % | - | - | - | μm | μm | μm 2.5 | % | - |
| Example 1 | 30 | 0.9 | 6.0 | 25 | 70 | 70 | 30 | 50 | 2.5 | 80 | A |
| Example 2 | 30 | 0.9 | 3.5 | 40 | 85 | 73 | 30 | 50 | 1.5 | 80 | A |
| Example 3 | 30 | 0.9 | 2.8 | 55 | 95 | 75 | 30 | 50 | 1.0 | 80 | A |
| Example 4 | 30 | 0.9 | 2.3 | 60 | 100 | 80 | 30 | 50 | 0.5 | 80 | A |
| Example 5 | 30 | 0.9 | 2.3 | 65 | 105 | 80 | 30 | 40 | 0.2 | 75 | A |
| Example 6 | 30 | 0.9 | 4.5 | 35 | 70 | 75 | 20 | 50 | 1.5 | 80 | A |
| Example 7 | 40 | 0.9 | 3.5 | 50 | 110 | 73 | 30 | 50 | 1.5 | 80 | A |
| Example 8 | 40 | 0.9 | 2.8 | 65 | 115 | 75 | 30 | 50 | 1.0 | 80 | A |
| Example 9 | 40 | 0.9 | 2.3 | 70 | 120 | 80 | 20 | 40 | 0.2 | 75 | A |
| Example 10 | 40 | 0.7 | 2.3 | 60 | 100 | 80 | 20 | 40 | 0.2 | 75 | A |
| Example 11 | 40 | 0.7 | 2.3 | 65 | 110 | 80 | 20 | 40 | 0.2 | 75 | B |
| Example 12 | 30 | 0.9 | 3.5 | 40 | 85 | 70 | 30 | 50 | 1.5 | 80 | A |
| Example 13 | 30 | 0.7 | 4.0 | 40 | 70 | 75 | 30 | 50 | 1.5 | 80 | A |
| Example 14 | 30 | 0.9 | 3.5 | 40 | 85 | 70 | 30 | 50 | 1.5 | 80 | A |
| Example 15 | 40 | 0.9 | 5.5 | 30 | 70 | 70 | 40 | 60 | 2.0 | 90 | B |
| Example 16 | 40 | 0.9 | 7.0 | 15 | 60 | 60 | 40 | 60 | 2.7 | 90 | B |
| Example 17 | 30 | 0.9 | 9.0 | 8 | 50 | 55 | 30 | 50 | 2.5 | 90 | A |
| Comparative Example 1 | 40 | 0.9 | 2.0 | 120 | 170 | 85 | 0 | 0 | 0 | 0 | B |
| Comparative Example 2 | 40 | 1.2 | 2.0 | 130 | 190 | 85 | 0 | 0 | 0 | 0 | B |
| Comparative Example 3 | 40 | 0.9 | 2.2 | 120 | 165 | 85 | 30 | 50 | 0.03 | 80 | B |
| Comparative Example 4 | 40 | 0.9 | 2.2 | 110 | 155 | 85 | 20 | 40 | 1.0 | 45 | B |
| Comparative Example 5 | 40 | 0.9 | 25 | 3 | 30 | 30 | 5 | 90 | 4.0 | 90 | A |

INDUSTRIAL APPLICABILITY

According to the present invention, a display filter having both excellent image clarity and excellent anti-reflection property can be provided. In addition, a light diffusion interface can be provided between the hard coat layer and the transparent resin layer, and thus, a display filter also having interference fringe prevention property can be provided.
The display filter according to the present invention is particularly appropriate as a plasma display filter.
The present invention can provide a plasma display having both excellent image clarity and excellent anti-reflection properties.

**Claims**

1. A display filter, wherein the index of reflection outline clarity (Cr), the index of reflection luminance (Lr) and the index of image clarity (Ct) as defined in the description satisfy the following conditions:

   $5 < Cr < 100$
   $Lr < 150$
   $50 < Ct < 100$.

2. The display filter according to Claim 1, wherein said index of reflection outline clarity (Cr), said index of reflection luminance (Lr) and said index of image clarity (Ct) satisfy the following conditions:

   $15 < Cr < 80$
   $Lr < 120$
   $60 < Ct < 100$.

3. The display filter according to Claim 1 or 2, wherein said filter is a multilayer body of a number of layers, and at least one of the layers is a light diffusion layer.

4. The display filter according to Claim 1 or 2, wherein said filter is a multilayer body of a number of layers, and at least one of interfaces between the layers is a light diffusion interface.

5. The display filter according to Claim 4, wherein the difference of refractive index between the layers on both sides of said light diffusion interface is 0.05 to 0.3.

6. The display filter according to Claim 4 or 5, wherein two or more layers which form said filter include a hard coat layer and a transparent resin layer as two adjacent layers, and the interface between the hard coat layer and the transparent resin layer is said light diffusion interface.

7. The display filter according to any one of Claims 4 to 6, wherein said light diffusion interface has a ripple structure where the width of ripples is 1 $\mu$m to 100 $\mu$m, the length of ripples is 1 $\mu$m to 500 $\mu$m, the height of ripples is 0.05 $\mu$m to 3.0 $\mu$m, and the density of ripples is 50 % to 100 %.

8. A display filter made up of a multilayer body comprising two or more layers including a hard coat layer and a transparent resin layer as two adjacent layers, wherein the difference of refractive index between the hard coat layer and the transparent resin layer is 0.05 to 0.3, and the interface between the two layers has a ripple structure where the width of ripples is 1 $\mu$m to 100 $\mu$m, the length of ripples is 1 $\mu$m to 500 $\mu$m, the height of ripples is 0. 05 $\mu$m to 3.0 $\mu$m, and the density of ripples is 50 % to 100 %.

9. The display filter according to any one of Claims 6 to 8, wherein said transparent resin layer is a polyester film.

10. The display filter according to Claim 9, wherein said polyester film is a polyethylene terephthalate film or a polyethylene-2,6-naphthalate film.

11. A plasma display using the display filter according to any one of Claims 1 to 10.

**Fig. 1**

**Fig. 2**

**Fig. 3**

**Fig. 4**

**Fig. 5**

**Fig. 6**

**Fig. 7**

## INTERNATIONAL SEARCH REPORT

| International application No. |
| --- |
| PCT/JP2007/058391 |

**A. CLASSIFICATION OF SUBJECT MATTER**
$G02B1/11$(2006.01)i, $G02B1/10$(2006.01)i, $G02B5/02$(2006.01)i, $G09F9/00$
(2006.01)i

According to International Patent Classification (IPC) or to both national classification and IPC

**B. FIELDS SEARCHED**

Minimum documentation searched (classification system followed by classification symbols)
G02B1/11, G02B1/10, G02B5/02, G09F9/00

Documentation searched other than minimum documentation to the extent that such documents are included in the fields searched
Jitsuyo Shinan Koho 1922-1996 Jitsuyo Shinan Toroku Koho 1996-2007
Kokai Jitsuyo Shinan Koho 1971-2007 Toroku Jitsuyo Shinan Koho 1994-2007

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | JP 2004-126495 A (DAICEL CHEM IND LTD.),<br>22 April, 2004 (22.04.04),<br>Par. No. [0064]<br>& US 2003/112520 A1 | 1-3,11<br>4-10 |
| X<br>Y | JP 2003-255106 A (MITSUBISHI KAGAKU POLYESTER<br>FILM KABUSHIKI KAISHA),<br>10 September, 2003 (10.09.03),<br>Par. Nos. [0003], [0008] to [0009]<br>(Family: none) | 1-3,11<br>4-10 |
| X<br>Y | JP 2006-058616 A (SUMITOMO CHEM CO., LTD.),<br>02 March, 2006 (02.03.06),<br>Full text<br>(Family: none) | 1-3,11<br>4-10 |

☒ Further documents are listed in the continuation of Box C.  ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 04 July, 2007 (04.07.07) | 17 July, 2007 (17.07.07) |

| Name and mailing address of the ISA/<br>Japanese Patent Office | Authorized officer |
| --- | --- |
| Facsimile No. | Telephone No. |

Form PCT/ISA/210 (second sheet) (April 2005)

## INTERNATIONAL SEARCH REPORT

| | International application No. |
|---|---|
| | PCT/JP2007/058391 |

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 2005-107005 A  (DAINIPPON PRINTING CO., LTD.), 21 April, 2005 (21.04.05), Par. Nos. [0008] to [0009], [0014] to [0015], [0038] & US 2005/094273 A1 | 4-10 |

Form PCT/ISA/210 (continuation of second sheet) (April 2005)

## INTERNATIONAL SEARCH REPORT

| International application No. |
| --- |
| PCT/JP2007/058391 |

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:
    because they relate to subject matter not required to be searched by this Authority, namely:

2. ☐ Claims Nos.:
    because they relate to parts of the international application that do not comply with the prescribed requirements to such an extent that no meaningful international search can be carried out, specifically:

3. ☐ Claims Nos.:
    because they are dependent claims and are not drafted in accordance with the second and third sentences of Rule 6.4(a).

**Box No. III     Observations where unity of invention is lacking (Continuation of item 3 of first sheet)**

This International Searching Authority found multiple inventions in this international application, as follows:

Although a common matter of inventions in claims 1-11 is "a contour clearness index: (Cr), reflected-in brightness: (Lr), and a transmitting image clearness index: (Ct), of a filter used for a display as defined in the specification satisfy the following condition: 5<(Cr)<100, (Lr)<150 and 50<(Ct)<100", it is deemed to express by way of a specific assessing method such problems to be solved that a display filter is required to be good transmitting image clearness and less of reflected-in brightness. Since, however, a filter used for a display made to solve the problems and included in the numerical limitations is disclosed in a document 1: JP 2004-126495 A, a document 2: JP 2003-255106 A, and a document 3: JP 2006-058616 A, (continued to extra sheet)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
the

☐ The additional search fees were accompanied by the applicant's protest and, where applicable, payment of a protest fee..

☐ The additional search fees were accompanied by the applicant's protest but the applicable protest fee was not paid within the time limit specified in the invitation.

Form PCT/ISA/210 (continuation of first sheet (2)) (April 2005)

**INTERNATIONAL SEARCH REPORT**

International application No.

PCT/JP2007/058391

Continuation of Box No.III of continuation of first sheet(2)

it becomes clear afterward that the inventions are not novel.  Therefore,
it is apparent that the inventions in the claims 1-3, 11 and 4-10 do
not comply with the requirements for the unity of invention.

Form PCT/ISA/210 (extra sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000156182 A
- JP 2001281411 A
- JP 2004126495 A
- JP 2005242227 A
- JP 2005243509 A
- JP 2001233611 A
- JP 3272111 B
- JP 2003005663 A

**Non-patent literature cited in the description**

- Adhesives Data Book. Nikkan Kogyo Shimbun, Ltd, 1990, 83-88